(19) Europäisches Patentamt
European Patent Office
Office européen des brevets

(11) **EP 3 050 226 B1**

(12) # EUROPEAN PATENT SPECIFICATION

(45) Date of publication and mention
of the grant of the patent:
**12.06.2019 Bulletin 2019/24**

(51) Int Cl.:
*H04B 7/26* (2006.01)          *H04L 1/18* (2006.01)
*H04W 72/04* (2009.01)

(21) Application number: **14802965.5**

(22) Date of filing: **19.09.2014**

(86) International application number:
**PCT/US2014/056674**

(87) International publication number:
**WO 2015/047917 (02.04.2015 Gazette 2015/13)**

(54) **TIME DIVISION LONG TERM EVOLUTION (TD-LTE) FRAME STRUCTURE MODIFICATION**

ÄNDERUNG EINER TD-LTE-RAHMENSTRUKTUR

MODIFICATION DE STRUCTURE DE TRAME PAR RÉPARTITION TEMPORELLE D'ÉVOLUTION
À LONG TERME (TD-LTE)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2013 US 201361883169 P
12.12.2013 US 201314105106**

(43) Date of publication of application:
**03.08.2016 Bulletin 2016/31**

(73) Proprietor: **Qualcomm Incorporated
San Diego, CA 92121-1714 (US)**

(72) Inventors:
- **LIU, Ruoheng
  San Diego, California 92121-1714 (US)**
- **NAMGOONG, June
  San Diego, California 92121-1714 (US)**
- **RAJAGOPALAN, Venkatraman
  San Diego, California 92121-1714 (US)**
- **JAYARAMAN, Srikant
  San Diego, California 92121-1714 (US)**

(74) Representative: **Wagner & Geyer
Partnerschaft
Patent- und Rechtsanwälte
Gewürzmühlstrasse 5
80538 München (DE)**

(56) References cited:
**EP-A1- 2 207 278          EP-A1- 2 216 915
WO-A1-2008/088252    US-A1- 2009 034 491**

- **CATT ET AL: "DL/UL guard period for frame
  structure type 2", 3GPP DRAFT; R1-071905, 3RD
  GENERATION PARTNERSHIP PROJECT (3GPP),
  MOBILE COMPETENCE CENTRE ; 650, ROUTE
  DES LUCIOLES ; F-06921 SOPHIA-ANTIPOLIS
  CEDEX ; FRANCE, vol. RAN WG1, no. Beijing,
  china; 20070426, 26 April 2007 (2007-04-26),
  XP050111808, [retrieved on 2007-04-26]**
- **MITSUBISHI ELECTRIC: "UE-specific idle period
  for half-duplex communications", 3RD
  GENERATION PARTNERSHIP PROJECT (3GPP);
  TECHNICALSPECIFICATION GROUP (TSG)
  RADIO ACCESS NETWORK (RAN);
  WORKINGGROUP 1 (WG1), XX, XX, vol.
  R1-062369, 27 August 2006 (2006-08-27), pages
  1-11, XP003019663,**

**Description**

**CROSS-REFERENCE TO RELATED APPLICATIONS**

**BACKGROUND**

**Field**

Aspects of the present disclosure relate generally to wireless communication systems, and more particularly to modification of a time division long term evolution (TD-LTE) frame structure.

**Background**

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

This has outlined, rather broadly, the features and technical advantages of the present disclosure in order that the detailed description that follows may be better understood. Additional features and advantages of the disclosure will be described below. It should be appreciated by those skilled in the art that this disclosure may be readily utilized as a basis for modifying or designing other structures for carrying out the same purposes of the present disclosure. It should also be realized by those skilled in the art that such equivalent constructions do not depart from the teachings of the disclosure as set forth in the appended claims. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

Attention is drawn to EP 2 216 915 A1, which is directed to data transmission in a TDD system and comprises configuring, by a base station, a length respectively for a Guard Period (GP) slot, a Downlink Pilot Slot (DwPTS) and an Uplink Pilot Slot (UpPTS) within a special field of a radio half-frame based on a current coverage area taking one Orthogonal Frequency Division Multiplexing (OFDM) symbol as a unit, and issuing a configured result to a user device; performing, by the base station, data transmission with the user device via the radio half-frame.

Attention is drawn to EP 2 207 278 A1, which is directed to a Long Term Evolution time division duplex system that can carry out reconfiguration for half-frame structures. According to the coverage range requirements of the system, it performs flexible configuration of the number of special time slot areas and the downlink pilot time slots, guard intervals or uplink pilot time slots included therein, and so can support different coverage ranges.

**Summary**

In accordance with the present invention a method and apparatus for wireless communications as set forth in the independent claims are provided. Preferred embodiments are described in the dependent claims.

In one aspect of the present disclosure, a method of wireless communication is disclosed. The method includes communicating with a base station using an extended special subframe. Communicating with the base station using the extended special subframe may be performed by disabling an uplink pilot time slot and an adjacent uplink subframe.

In another aspect of the present disclosure, a method of wireless communication is disclosed. The method includes detecting a position of a user equipment (UE) as being within a first extended cell radius or a second extended cell radius. The method also includes communicating with the UE using a special subframe that extends over an uplink pilot time slot and one or more disabled, adjacent uplink subframes.

In further aspect of the present disclosure, an apparatus having a memory and at least one processor coupled to the memory and operable to provide wireless communication is disclosed. The processor(s) is operable to communicate with a base station using an extended special subframe. Communication with the eNodeB using the extended special subframe may be performed by disabling an uplink pilot time slot and an adjacent uplink subframe.

In another aspect of the present disclosure, a computer program product having a non-transitory computer-readable medium including program code recorded thereon and operable to provide wireless communication is disclosed. The program code includes program code to communicate with a base station using an extended special subframe. Communication with the base station using the extended special subframe may be performed by disabling an uplink pilot time slot and an adjacent uplink subframe.

In further aspect of the present disclosure, an apparatus to provide wireless communication is disclosed. The apparatus includes means for identifying a user equipment (UE) location within an extended cell radius. The apparatus includes means for communicating with a base station using an extended special subframe. Communicating with the base station using the extended special subframe may be performed by disabling an uplink pilot time slot and an adjacent uplink subframe.

In another aspect of the present disclosure, an apparatus having a memory and at least one processor coupled to the memory and operable to provide wireless communication is disclosed. The processor(s) is operable to detect a position of a user equipment (UE) as being within a first extended cell radius or a second extended cell radius. The processor(s) is also operable to communicate with the UE using a special subframe that extends over an uplink pilot time slot and one or more disabled, adjacent uplink subframes.

In a further aspect of the present disclosure, a computer program product having a non-transitory computer-readable medium including program code recorded thereon and operable to provide wireless communication is disclosed. The program code includes program code to detect a position of a user equipment (UE) as being within a first extended cell radius or a second extended cell radius. The program code includes program code to communicate with the UE using a special subframe that extends over an uplink pilot time slot and one or more disabled, adjacent uplink subframes.

In another aspect of the present disclosure, an apparatus to provide wireless communication is disclosed. The apparatus includes means for detecting a position of a user equipment (UE) as being within a first extended cell radius or a second extended cell radius. The apparatus includes means for communicating with the UE using a special subframe that extends over an uplink pilot time slot and one or more disabled, adjacent uplink subframes.

Additional features and advantages of the disclosure will be described below. It should be appreciated by those skilled in the art that this disclosure may be readily utilized as a basis for modifying or designing other structures for carrying out the same purposes of the present disclosure. It should also be realized by those skilled in the art that such equivalent constructions do not depart from the teachings of the disclosure as set forth in the appended claims. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

The scope of the invention is defined in the appended claims. Any reference to "embodiment(s)" or "aspect(s) of the invention" in this description not falling under the scope of the claims should be interpreted as illustrative example(s) for understanding the invention.

## BRIEF DESCRIPTION OF THE DRAWINGS

The features, nature, and advantages of the present disclosure will become more apparent from the detailed description set forth below when taken in conjunction with the drawings in which like reference characters identify correspondingly throughout.

FIGURE 1 is a diagram illustrating an example of a network architecture.

FIGURE 2 is a diagram illustrating an example of an access network.

FIGURE 3 is a diagram illustrating an example of a downlink frame structure in LTE.

FIGURE 4 is a diagram illustrating an example of an uplink frame structure in LTE.

FIGURE 5 is a diagram illustrating an example of a radio protocol architecture for the user and control plane.

FIGURE 6 is a diagram illustrating an example of an evolved Node B and user equipment in an access network.

FIGURE 7 is a block diagram conceptually illustrating an example of an air to ground communication system according to an aspect of the present disclosure.

FIGURE 8 is a diagram conceptually illustrating an example of an aircraft antenna system according to an aspect of the present disclosure.

FIGURE 9 is a block diagram in which timing advance coordinates communications of UEs that are positioned at different distances from a base station.

FIGURE 10 is a timing diagram in which a guard period ($T_{GP}$) prevents overlap between downlink and uplink communications at UE.

FIGURE 11 is a timing diagram in which a duration of a guard period ($T_{GP}$) is insufficient, resulting in an overlap between downlink and uplink communications at a base station.

FIGURE 12 is a block diagram illustrating conventional TD-LTE radio frame configurations.

FIGURE 13 is a table illustrating special subframe component lengths according to the various special subframe configurations based on a normal cyclic prefix (CP).

FIGURE 14 illustrates a time-domain resource allocation of synchronization and broadcast channels within the subframes of a TD-LTE radio frame structure.

FIGURE 15 is a block diagram illustrating a modified radio frame structure according one aspect of the present disclosure.

FIGURES 16A and 16B are block diagrams illustrating configurations of a TD-LTE radio frame structure with a first extended special subframe to support a first extended cell radius according one aspect of the present disclosure.

FIGURES 17A and 17B are block diagrams illustrating other configurations of a TD-LTE radio frame structure with a first extended special subframe to support the first extended cell radius according one aspect of the present disclosure.

FIGURES 18A and 18B are block diagrams illustrating configurations of a TD-LTE radio frame structure with a second extended special subframe to support a second extended cell radius according one aspect of the present disclosure.

FIGURES 19A and 19B are block diagrams illustrating other configurations of a TD-LTE radio frame structure with a second extended special subframe to support a second extended cell radius according one aspect of the present disclosure.

FIGURE 20 is a table of the guard time overhead associated with the Next-Gen air to ground (AG) system configurations for supporting the first extended cell radius and the second extend cell radius as compared to a conventional (non-extended) cell radius.

FIGURE 21 illustrates categorization of an air cell in multiple zones to support extended cell radii according to one aspect of the present disclosure.

FIGURES 22A and 22B are block diagram illustrating nested frame structures according to one aspect of the present disclosure.

FIGURE 23 further illustrates categorization of an air cell in multiple zones to support extended cell radii according to another aspect of the present disclosure.

FIGURE 24 is a flow diagram illustrating a method for modification of a time division long term evolution (TD-LTE) frame structure according to an aspect of the present disclosure.

FIGURE 25 is a block diagram illustrating different modules/means/components in an exemplary apparatus.

## DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. It will be apparent to those skilled in the art, however, that these concepts may be practiced without these specific details. In some instances, well-known structures and components are shown in block diagram form in order to avoid obscuring such concepts. As described herein, the use of the term "and/or" is intended to represent an "inclusive OR", and the use of the term "or" is intended to represent an "exclusive OR".

Aspects of the telecommunication systems are presented with reference to various apparatus and methods. These apparatus and methods are described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a non-transitory computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Combinations of the above should also be included within the scope of computer-readable media.

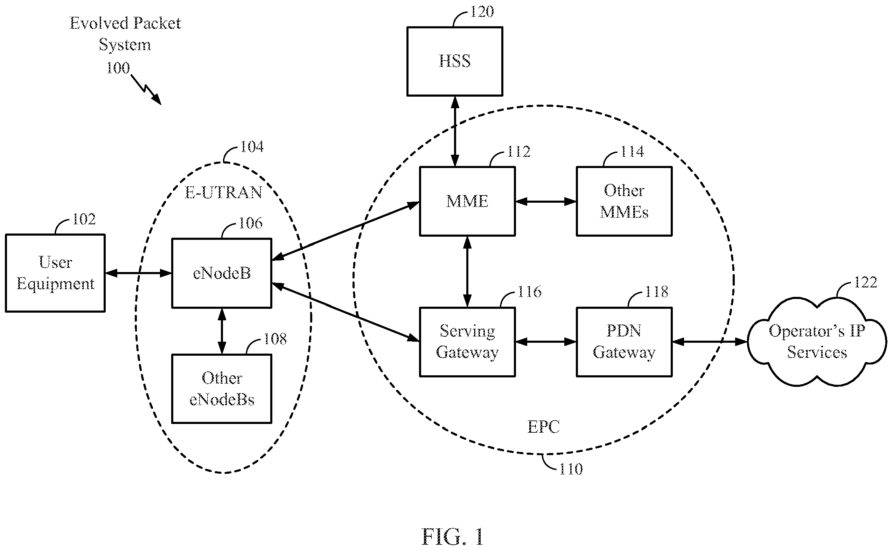

FIGURE 1 is a diagram illustrating an LTE network architecture 100. The LTE network architecture 100 may be referred to as an Evolved Packet System (EPS) 100. The EPS 100 may include one or more user equipment (UE) 102, an evolved UMTS terrestrial radio access network (E-UTRAN) 104, an evolved packet core (EPC) 110, a home subscriber server (HSS) 120, and an operator's IP services 122. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNodeB) 106 and other eNodeBs 108. The eNodeB 106 provides user and control plane protocol terminations toward the UE 102. The eNodeB 106 may be connected to the other eNodeBs 108 via a backhaul (e.g., an X2 interface). The eNodeB 106 may also be referred to as a base station, a base transceiver station, a radio base station, a radio transceiver, a transceiver function, a basic service set (BSS), an extended service set (ESS), or some other suitable terminology. The eNodeB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNodeB 106 is connected to the EPC 110 via, e.g., an S1 interface. The EPC 110 includes a mobility management entity (MME) 112, other MMEs 114, a serving gateway 116, and a packet data network (PDN) Gateway 118. The MME 112 is the control node that processes the signaling between the UE 102 and the EPC 110. Generally, the MME 112 provides bearer and connection management. All user IP packets are transferred through the serving gateway 116, which itself is connected to the PDN Gateway 118. The PDN Gateway 118 provides UE IP address allocation as well as other functions. The PDN Gateway 118 is connected to the Operator's IP Services 122. The operator's IP services 122 may include the Internet, the Intranet, an IP multimedia subsystem (IMS), and a PS streaming service (PSS).

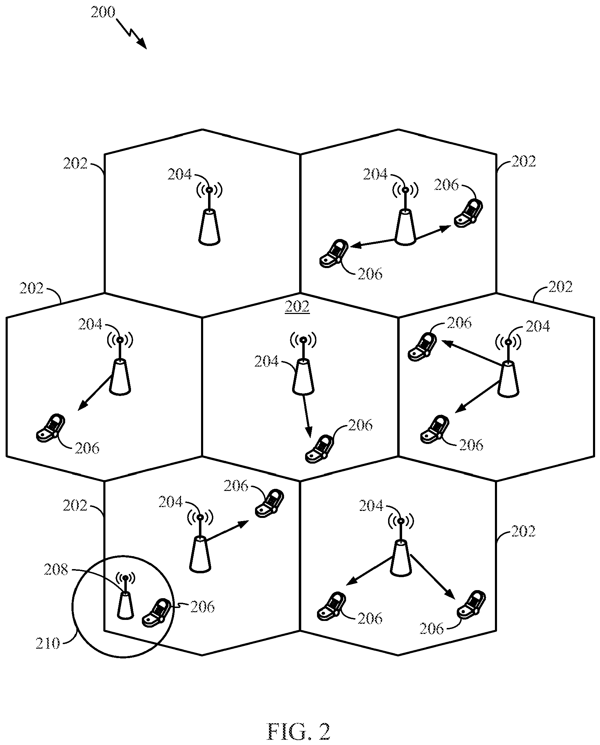

FIGURE 2 is a diagram illustrating an example of an access network 200 in an LTE network architecture. In this example, the access network 200 is divided into a number of cellular regions (cells) 202. One or more lower power class eNodeBs 208 may have cellular regions 210 that overlap with one or more of the cells 202. A lower power class eNodeB 208 may be a remote radio head (RRH), a femto cell (e.g., home eNodeB (HeNB)), a pico cell, or a micro cell. The macro eNodeBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNodeBs 204 are responsible for all radio related functions including radio bearer control, admission control, mobility control, scheduling, security, and connectivity to the serving gateway 116.

The modulation and multiple access scheme employed by the access network 200 may vary depending on the particular telecommunications standard being deployed. In LTE applications, OFDM is used on the downlink and SC-FDMA is used on the uplink to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to evolution-data optimized (EV-DO) or ultra mobile broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to universal terrestrial radio access (UTRA) employing wideband-CDMA (W-CDMA) and other variants of CDMA, such as TD-SCDMA; global system for mobile communications (GSM) employing TDMA; and evolved UTRA (E-UTRA), ultra mobile broadband (UMB), IEEE 802.11 (Wi-Fi), IEEE 802.16 (WiMAX), IEEE 802.20, and flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNodeBs 204 may have multiple antennas supporting MIMO technology. The use of MIMO technology enables the eNodeBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the downlink. The spatially precoded data streams arrive at the UE(s) 206 with different spatial signatures, which enables each of the UE(s) 206 to recover the one or more data streams destined for that UE 206. On the uplink, each UE 206 transmits a spatially precoded data stream, which enables the eNodeB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the downlink. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The uplink may use SC-FDMA in the form of a DFT-spread OFDM signal to compensate for high peak-to-average power ratio (PAPR).

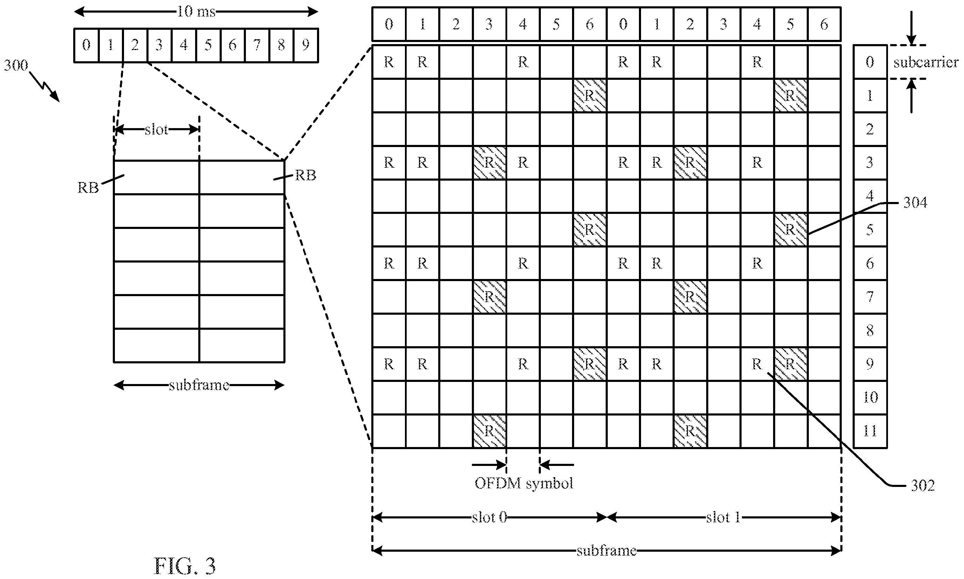

FIGURE 3 is a diagram 300 illustrating an example of a downlink frame structure in LTE. A frame (10 ms) may be divided into 10 equally sized subframes. Each subframe may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, for a total of 84 resource elements. For an extended cyclic prefix, a resource block contains 6 consecutive OFDM symbols in the time domain, resulting in 72 resource elements. Some of the resource elements, as indicated as R 302, 304, include downlink reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical downlink shared channel (PDSCH) is mapped. The number of bits carried by each resource element depends on the modulation scheme. Thus, the more resource blocks that a UE receives and the higher the modulation scheme, the higher the data rate for the UE.

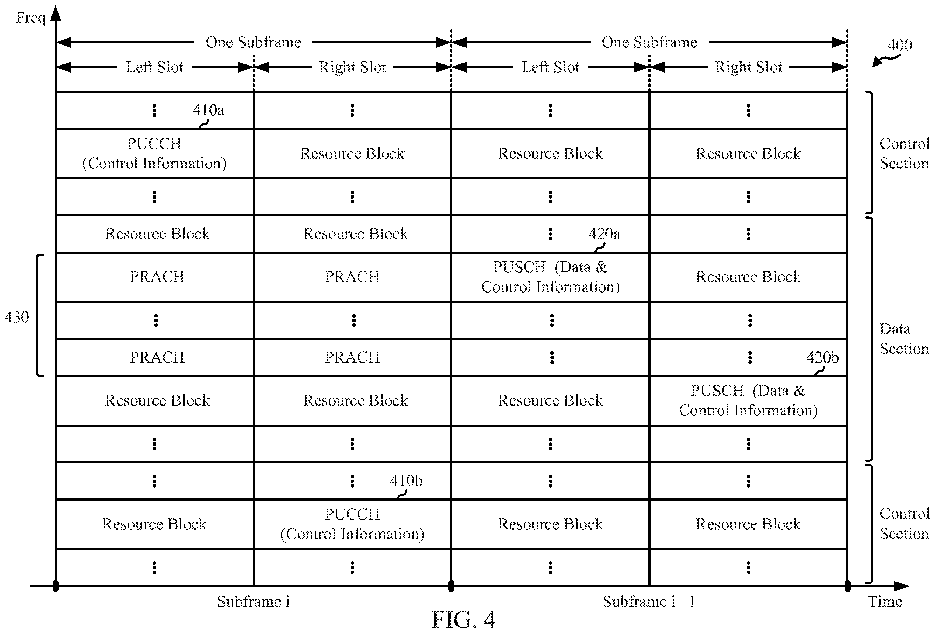

FIGURE 4 is a diagram 400 illustrating an example of an uplink frame structure in LTE. The available resource blocks for the uplink may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The uplink frame structure results in the data section including contiguous subcarriers, which may allow a single UE to be assigned all of the contiguous subcarriers in the data section.

A UE may be assigned resource blocks 410a, 410b in the control section to transmit control information to an eNodeB. The UE may also be assigned resource blocks 420a, 420b in the data section to transmit data to the eNodeB. The UE may transmit control information in a physical uplink control channel (PUCCH) on the assigned resource blocks in the control section. The UE may transmit only data or both data and control information in a physical uplink shared channel (PUSCH) on the assigned resource blocks in the data section. An uplink transmission may span both slots of a subframe and may hop across frequency.

A set of resource blocks may be used to perform initial system access and achieve uplink synchronization in a physical random access channel (PRACH) 430. The PRACH 430 carries a random sequence. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

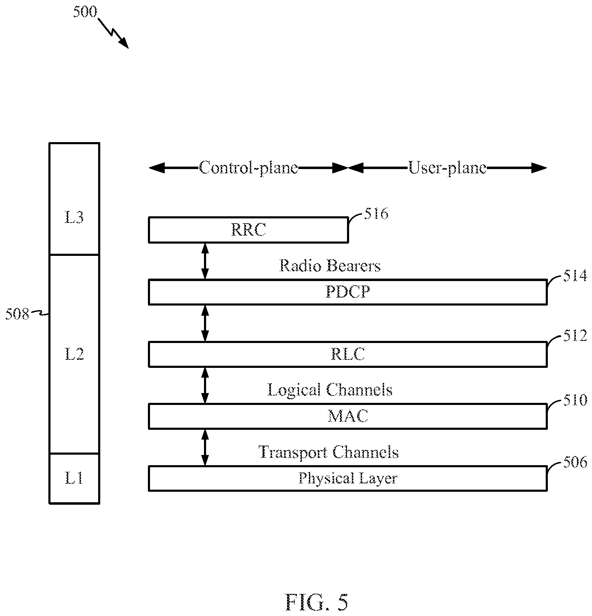

FIGURE 5 is a diagram 500 illustrating an example of a radio protocol architecture for the user and control planes in LTE. The radio protocol architecture for the UE and the eNodeB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNodeB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNodeB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNodeBs. The radio link control (RLC) sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNodeB is substantially the same for the physical layer 506 and the L2 layer 508 with the exception that there is no header compression function for the control plane. The control plane also includes a radio resource control (RRC) sublayer 516 in Layer 3 (L3 layer). The radio resource control (RRC) sublayer 516 is responsible for obtaining radio resources (i.e., radio bearers) and for configuring the lower layers using radio resource control signaling between the eNodeB and the UE.

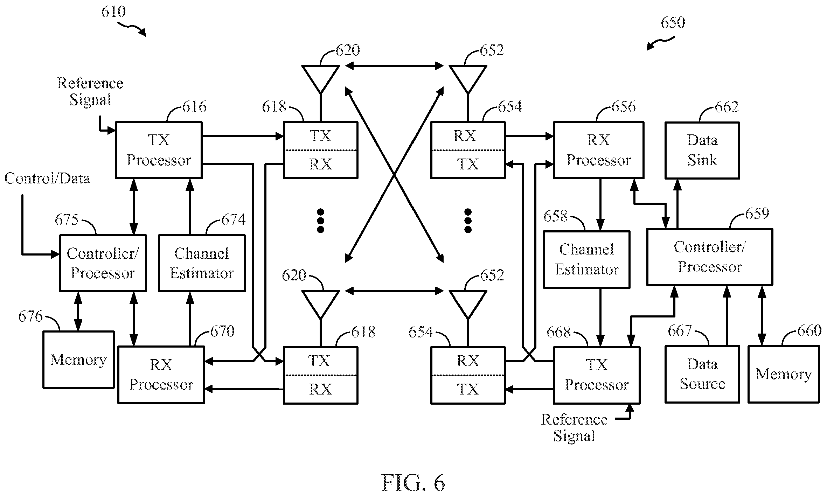

FIGURE 6 is a block diagram of an eNodeB 610 in communication with a UE 650 in an access network. In the downlink, upper layer packets from the core network are provided to a controller/processor 675. The controller/processor 675 implements the functionality of the L2 layer. In the downlink, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The transmit processor 616 implements various signal processing functions for the L1 layer (i.e., physical layer). The signal processing functions includes coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream is then provided to a different antenna 620 via a separate transmitter 618TX. Each transmitter 618TX modulates an RF carrier with a respective spatial stream for transmission.

At the UE 650, each receiver 654RX receives a signal through its respective antenna 652. Each receiver 654RX recovers information modulated onto an RF carrier and provides the information to the receiver processor 656. The receiver processor 656 implements various signal processing functions of the L1 layer. The receiver processor 656 performs spatial processing on the information to recover any spatial streams destined for the UE 650. If multiple spatial streams are destined for the UE 650, they may be combined by the receiver processor 656 into a single OFDM symbol stream. The receiver processor 656 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNodeB 610. These soft decisions may be based on channel estimates computed by the channel estimator 658. The soft decisions are then decoded and deinterleaved to recover the data and control signals that were originally transmitted by the eNodeB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the uplink, the controller/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the uplink, a data source 667 is used to provide upper layer packets to the controller/processor 659. The data source 667 represents all protocol layers above the L2 layer. Similar to the functionality described in connection with the downlink transmission by the eNodeB 610, the controller/processor 659 implements the L2 layer for the user plane and the control plane by providing header compression, ciphering, packet segmentation and reordering, and multiplexing between logical and transport channels based on radio resource allocations by the eNodeB 610. The controller/processor 659 is also responsible for HARQ operations, retransmission of lost packets, and signaling to the eNodeB 610.

Channel estimates derived by a channel estimator 658 from a reference signal or feedback transmitted by the eNodeB 610 may be used by the TX processor 668 to select the appropriate coding and modulation schemes, and to facilitate spatial processing. The spatial streams generated by the TX processor 668 are provided to different antenna 652 via separate transmitters 654TX. Each transmitter 654TX modulates an RF carrier with a respective spatial stream for transmission.

The uplink transmission is processed at the eNodeB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the uplink, the controller/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

## TIME DIVISION LONG TERM EVOLUTION (TD-LTE) FRAME STRUCTURE MODIFICATION

The spectrum available for Internet communication to aircraft by terrestrial air to ground (ATG) systems is limited for practical and economic reasons. Providing seamless communication with aircraft flying at high altitudes over a large area (such as the continental U.S.) involves spectrum that is available over the large area. That is, the spectrum assigned to the ATG system should be available nationwide. It has been problematic, however, to identify a portion of spectrum that is available nationwide, much less arranging to free up such a portion of spectrum that is allocated for other uses.

A large amount of spectrum is assigned to geostationary satellites for use in broadcast TV and two way fixed satellite service (FSS). In one aspect of the present disclosure, a high data rate aircraft to ground communications antenna system provides an aircraft with Internet service.

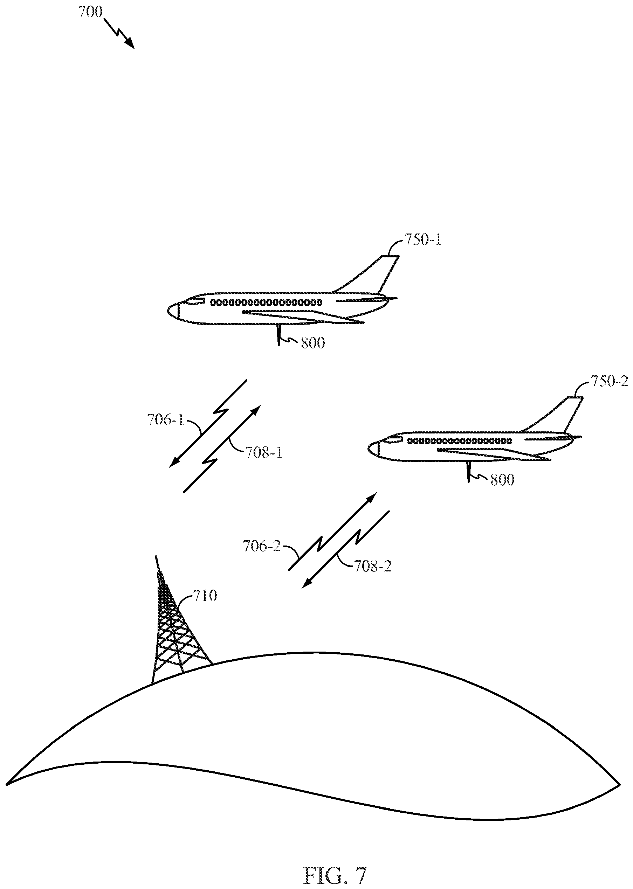

In particular, aspects of the present disclosure provide methods and apparatus for a next generation air to ground (Next-Gen AG) system. The Next-Gen AG system may include ground base stations (GBSs) in communication with aircraft transceivers (ATs) in airplanes that may use an uplink portion of spectrum assigned for satellite systems. A system 700 for Next-Gen AG communication according to an illustrative aspect of the present disclosure is shown in FIGURE 7.

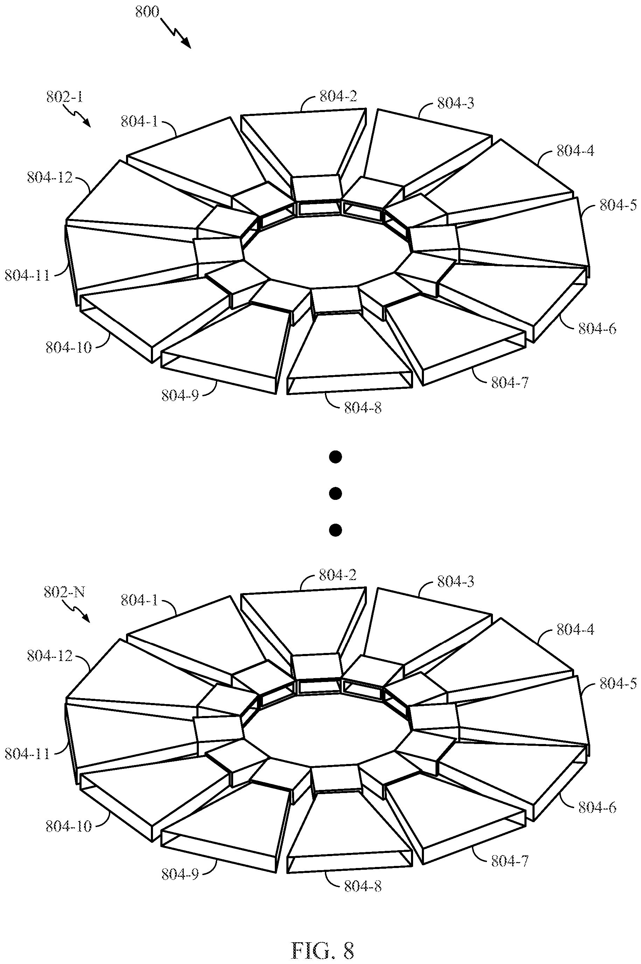

In this configuration, the Next-Gen AG system 700 includes a ground base station 710 that transmits and receives signals on a satellite uplink band using a forward link (FL) 708-1 and a reverse link (RL) 706-1. A first aircraft 750-1 includes an aircraft antenna 800 and aircraft transceiver (AT) 650 (FIGURE 6) in communication with the ground base station 710. The aircraft transceiver (AT) 650 may also receive and transmit signals on the satellite uplink band using the forward link 708-1 and the return link 706-1. In this configuration, the aircraft antenna 800 may include a directional antenna, for example, as shown in FIGURE 8.

FIGURE 8 shows one example of an aircraft antenna 800 having aircraft antenna arrays 802 (802-1,..., 802-N) operating at, for example, 14 gigahertz (GHz). Representatively, the aircraft antenna array 802-1 has twelve horn antennas 804 (804-1,...,804-12) each covering 30° sectors in azimuth with an aperture size of approximately 2.0 inches x 0.45 inches, and having a gain of >10 dBi (dB isotropic). In one configuration, an overall diameter of the antenna array is roughly 8 inches. Although described with reference to an aircraft antenna array, any directional antenna may be provided according to the aspects of the present disclosure. While the described aspect of the present disclosure are provided with reference to aircraft, the present disclosure is not limited thereto. Aspect of the present disclosure may apply to any current or future airborne objects that communicate with a ground station.

In this configuration, the aircraft antenna 800 includes a multi-beam switchable array that is able to communicate with the ground base station 710 at any azimuth angle. As shown in FIGURE 7, the aircraft antenna 800 is mounted below the fuselage with a small protrusion and aerodynamic profile to reduce or minimize wind drag. In one configuration, the antenna elevation coverage is from approximately 3° to 20° below horizon to provide, for example, the pointing directions for the antenna gain. The aircraft antenna 800 may include an array N of elements positioned such that each element directs a separate beam at different azimuth angles, each covering 360/N degrees, for example, as shown in FIGURE 8.

Although FIGURE 8 illustrates the aircraft antenna arrays 802 in a twelve-beam array configuration, it should be recognized that other configurations are possible while remaining within the scope of the present disclosure. In particular, one example configuration includes four-antenna arrays in a four-beam array configuration. In another configuration, a directional antenna may be provided as part of the Next-Gen AG system 700 while remaining within the scope of the present disclosure.

Referring again to FIGURE 7, a second aircraft 750-2 includes a system having an aircraft antenna 800 that communicates with an aircraft transceiver (AT) 650, as shown in FIGURE 6. The aircraft antenna 800 is in communication with the ground base station 710 and also receives and transmits signals on the satellite uplink band using a forward link 708-2 and a return link 706-2.

A Next-Gen AG system, for example, as shown in FIGURE 7, may provide broadband connectivity to flying aircraft using an aircraft transceiver (AT) 650, as shown in FIGURE 6. In this configuration, the aircraft transceiver may operate according to a time division long term evolution (TD-LTE) air interface. In a time division duplex (TDD) terminal (e.g., the AT 650), however, a timing-advanced uplink transmission should not overlap with reception of any preceding downlink.

For example, a TD-LTE air interface may operate according to an orthogonal uplink intra-cell multiple access scheme. In this example, transmissions from different UEs (e.g., AT 650) in a cell are time aligned at the receiver of the eNodeB (e.g., the ground base station 710) to maintain uplink multiple access orthogonality. In operation, a timing advance may be applied at the UE transmitter to provide time alignment of the uplink transmissions relative to the received downlink timing. Using a timing advance at the base station may counteract the various propagation delays between different UEs.

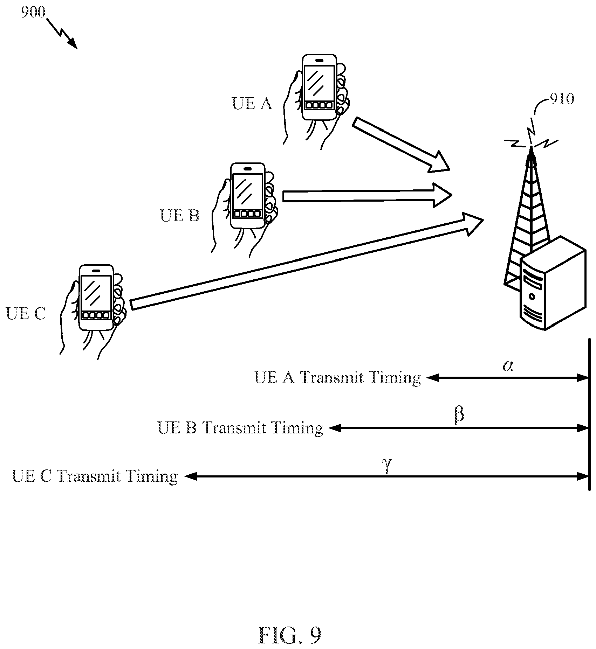

FIGURE 9 is a block diagram 900 in which a UE A, a UE B and a UE C are positioned at different distances from a base station 910. The differing distances from the base station 910, however, result in varying propagation delays from the different UEs to the base station 910. In this example, the UE transmissions are orthogonal when they arrive at the base station and are made synchronous in the time domain by performing timing advance (TA) signaling at the base station. Generally, the application of the timing advance at the base station synchronizes the UE transmissions within a fraction of the CP (cyclic prefix) length. A timing advance command may be sent as a medium access control (MAC) element with a 0.52 microsecond timing resolution and from 0 up to a maximum of 0.67 milliseconds in a baseline TD-LTE configuration. In this example, the UE A receives a timing advance ($\alpha$), UE B receives a timing advance ($\beta$) and UE C receives a timing advance ($\gamma$) to enable time alignment at the receiver of the base station 910.

In TD-LTE, switching between transmit/receive functions occurs from downlink to uplink (UE switching from reception to transmission) and from uplink to downlink (eNodeB (base station) switching from reception to transmission). To preserve the orthogonality of the LTE uplink, propagation delays between an eNodeB and the UEs are compensated by a timing advance. For a time division duplex (TDD) system, the timing-advanced uplink transmission should not overlap with reception of any preceding downlink.

A TD-LTE air interface may prevent overlap between downlink and uplink communication by specifying a transmission gap (e.g., a guard period (GP)) between the downlink and uplink communications. The guard period between reception (downlink) and transmission (uplink) may be specified to accommodate a greatest possible timing advance and any switching delay. The timing advance of the TD-LTE air interface is a function of the round-trip propagation delay. In addition, the total guard time for an uplink-downlink cycle of a TD-LTE air interface may be longer than the worst round-trip propagation delay supported by a cell.

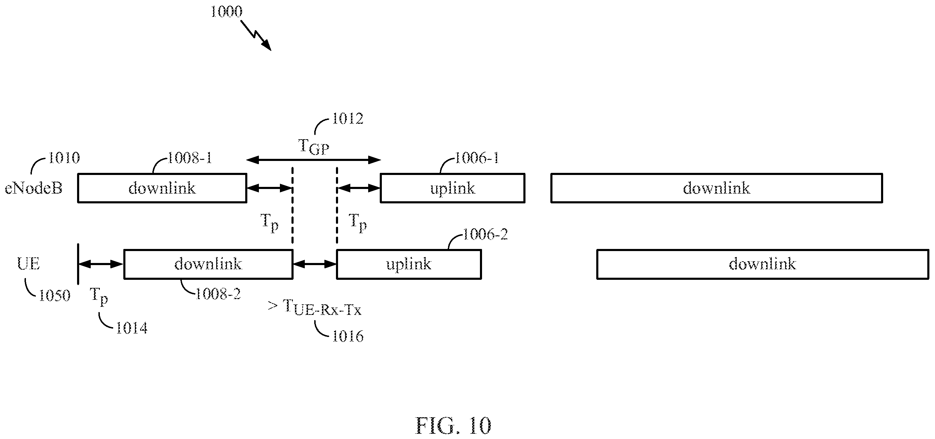

FIGURE 10 is a timing diagram 1000 in which a guard period ($T_{GP}$) 1012 between a downlink communication 1008-1 and an uplink communication 1006-1 of an eNodeB is selected to prevent overlap between a downlink communication 1008-2 and an uplink communication 1006-2 of a UE 1050. To prevent the overlap, the guard period ($T_{GP}$) should exceed both a round-trip propagation delay ($2T_P$) and a receive-to-transmit switching delay ($T_{UE\text{-}Rx\text{-}Tx}$) 1016 at the UE 1050, where $T_P$ denotes the one-way propagation delay. For example, the guard period ($T_{GP}$) may be computed according the following equation:

$$T_{GP} > 2T_P + T_{UE\text{-}Rx\text{-}Tx} \qquad\qquad (1)$$

The 3GPP LTE specification, however, is limited to a guard period duration of approximately 0.72 milliseconds. This guard period duration presumes a maximum one-hundred (100) kilometer cell radius. In a Next-Gen AG system, however, a larger cell size (e.g., a cell radius of two-hundred fifty (250) to three hundred fifty (350) kilometers) may be specified.

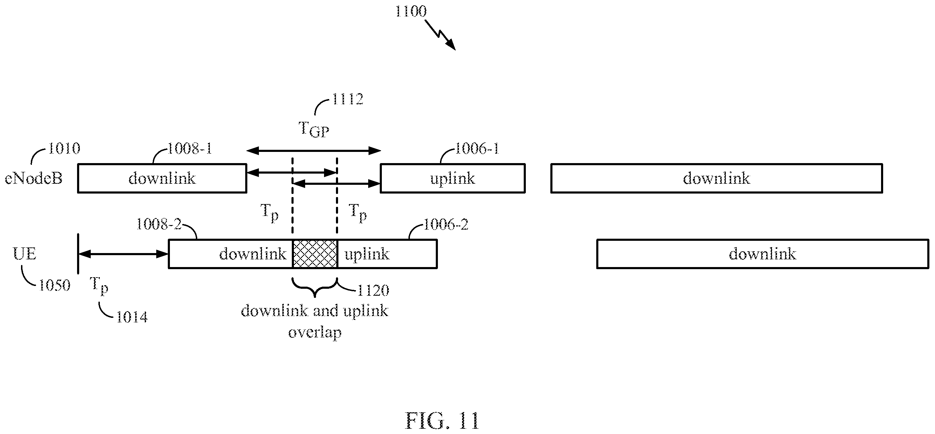

FIGURE 11 is a timing diagram 1100 in which a duration of the guard period ($T_{GP}$) 1112 between a downlink communication 1008-1 and an uplink communication 1006-1 of an eNodeB 1010 is insufficient, resulting in an overlap 1120 between a downlink communication 1008-2 and an uplink communication 1006-2 of the UE 1050. As a result, using the 3GPP defined TDD frame structures leads to uplink-downlink overlap and significant signal degradation and data loss within a Next-Gen AG system.

In one aspect of the present disclosure, the frame structure used by an air interface of a Next-Gen AG system structure is modified. In one configuration, a TD-LTE frame structure with a two (2) millisecond special subframe is specified to support a cell radius on the order of two-hundred (200) to two-hundred fifty (250) kilometers. In another configuration, a TD-LTE frame structure with a three (3) millisecond special subframe is specified to support a cell radius on the order of three-hundred (300) to three-hundred fifty (350) kilometers. In a further configuration, a nested frame structure provides co-existence between different uplink-downlink subframe configurations. In one aspect of the present disclosure, air cells are categorized into multiple zones based on the distance to a base station (e.g., an eNodeB 610). In this aspect of the disclosure, different uplink/downlink subframe configurations corresponding to different round-trip propagation delays are used to accommodate communication with each of the multiple zones.

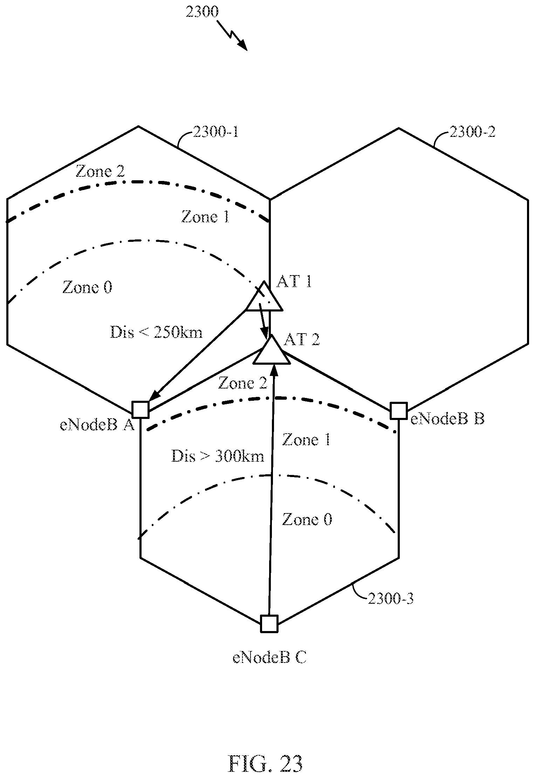

The nested frame structure enables dynamic variation as an airborne object moves from one zone to another. For example, the nested frame structure enables dynamic switching between various special subframes lengths in each zone. This dynamic switching may be achieved with or without a break in the call. When it is achieved without breaking the call, the nested frame structure becomes a dynamic frame structure. In one configuration, the nested frame structure dynamically varies between a non-extended special subframe, a first extended special subframe and a second extended special subframe as the UE moves between difference zones of an air cell (e.g., Zone 0, Zone 1 and Zone 2 of FIGURE 23).

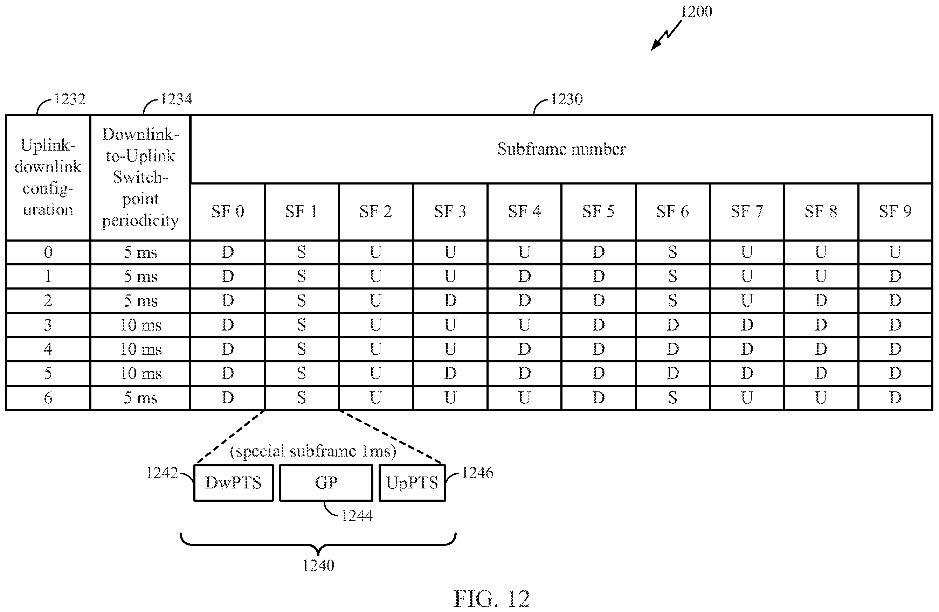

FIGURE 12 is a block diagram illustrating a conventional TD-LTE radio frame structure 1200. Representatively, the conventional TD-LTE radio frame structure 1200 includes a subframe number 1230, an uplink-downlink configuration column 1232 and a downlink-to-uplink switch-point periodicity column 1234. In this example, the TD-LTE radio frame structure spans ten (10) milliseconds and consists of ten (10) one (1) millisecond subframes (SF 0, ..., SF 9). The various subframes may be configured as a downlink (D) subframe, an uplink (U) subframe or a special (S) subframe. In this example, SF 1 is configured as a special subframe in each of the seven (0, ..., 6) uplink-downlink configurations; SF 6 is configured as a special subframe in uplink-downlink configurations 0, 1, 2 and 6.

The special subframe 1240 serves as a switching point between downlink and uplink communications. The special subframe 1240 includes a downlink pilot time slot (DwPTS) portion 1242, a guard period (GP) portion 1244 and an uplink pilot time slot (UpPTS) portion 1246. In operation, the DwPTS portion 1242 of the special subframe 1240 may be treated as a regular but shortened downlink subframe. The DwPTS portion 1242 usually contains a reference signal (RS), control information and a primary synchronization signal (PSS). The DwPTS portion may also carry data transmissions. The UpPTS portion 1246 of the special subframe 1240 may be used for either a sounding reference signal (e.g., a one (1) symbol length) or a special (random access channel (RACH) for a small cell size (e.g., a two (2) symbol length).

As shown in FIGURE 12, the GP portion 1244 of the special subframe 1240 provides a switching point between downlink and uplink communications. A length of the GP portion 1244 of the special subframe 1240 is one of the factors in determining the maximum supportable cell size. In this example a maximum length of the GP portion 1244 is:

$$MaxGPLength = 10 \text{ OFDM symbols} + 10 \text{ CPs} = 0.714 \text{ milliseconds} \quad (2)$$

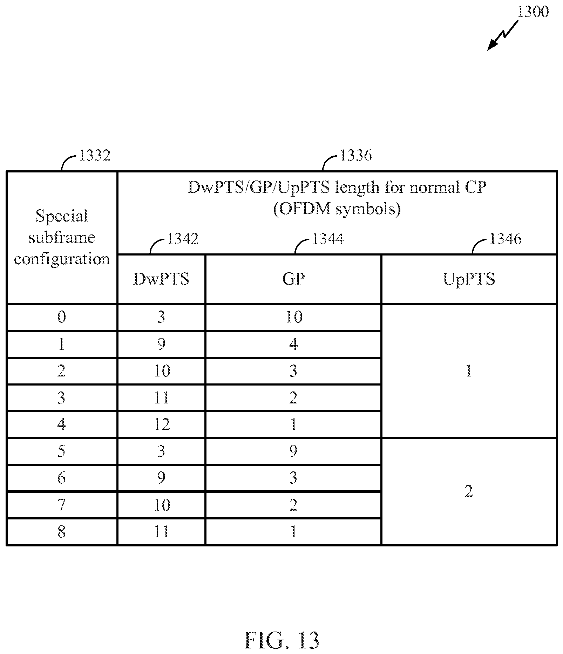

FIGURE 13 is a table 1300 illustrating special subframe component lengths according to the various special subframe configurations based on a normal cyclic prefix (CP). The table 1300 includes a special subframe configuration column 1332, a DwPTS column 1342, a GP column 1344 and a UpPTS column 1346 within a component length column 1336. In this example, the component lengths are indicated in units of orthogonal frequency division multiplexing (OFDM) symbols.

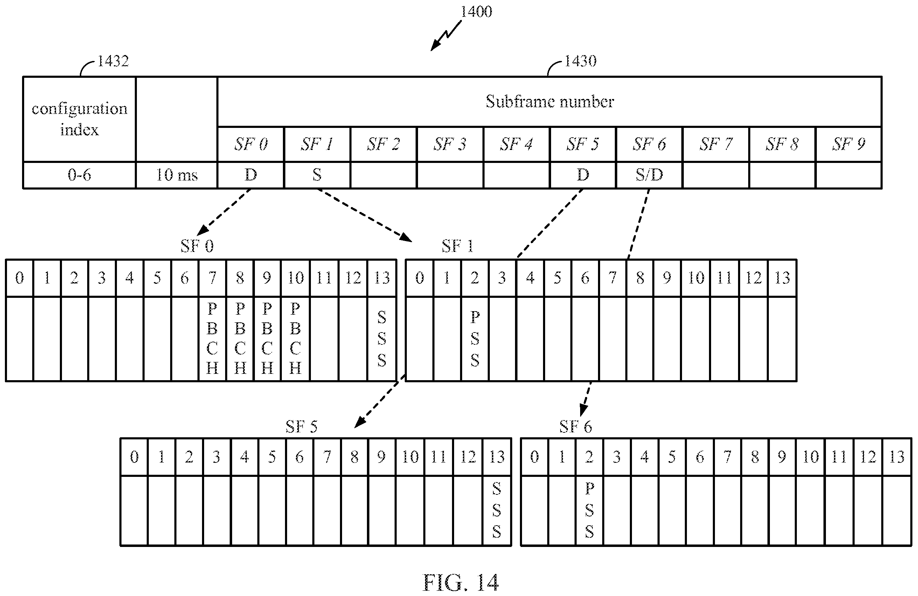

FIGURE 14 illustrates the time-domain resource allocation of synchronization and broadcast channels within the subframes of a TD-LTE radio frame structure 1400 based on a configuration index 1432 and a subframe number 1430. In this example, a primary synchronization signal (PSS) is allocated within the third OFDM symbol of subframe 1 and subframe 6 (e.g., every five (5) milliseconds of either a downlink subframe or a DwPTS portion of a special subframe). A secondary synchronization signal (SSS) is allocated within the last OFDM symbol of subframe 0 and subframe 5 (e.g., every five (5) milliseconds of a downlink subframe). A physical broadcast channel (PBCH) is allocated within OFDM symbols 7-10 of subframe 0 (e.g., every ten (10) milliseconds). A system information block of type 1 (SIB1) is allocated within subframe 5 (e.g., an even radio frame).

In one aspect of the present disclosure, the radio frame structure used by an air interface of a Next-Gen AG system structure is modified to accommodate a larger cell radius. As noted, a TD-LTE air interface may prevent overlap between uplink and downlink communication by specifying a transmission gap (e.g., a guard period (GP)) between the downlink and uplink communications. The 3GPP LTE specification, however, is limited to guard period durations on the order of 0.714 milliseconds (see equation (2)). This guard period duration presumes a maximum one-hundred (100) kilometer cell radius. In a Next-Gen AG system, however, a larger cell size (e.g., a cell radius of two-hundred fifty (250) to three hundred fifty (350) kilometers) is specified.

In one aspect of the present disclosure, a special subframe is redesigned to enable downlink to uplink switching with a large round trip delay (RTD). As noted above in FIGURE 10, overlap is prevented by specifying a guard period ($T_{GP}$) that exceeds a round-trip propagation delay ($2T_P$) and a receive-to-transmit switching delay ($T_{UE-Rx-Tx}$) 1016 at the UE 1050, where $T_P$ denotes the one-way propagation delay. The guard period ($T_{GP}$) may be computed according to equation (1). For example, assuming an expanded cell radius of two-hundred fifty (250) kilometers (km), the round trip propagation delay when an aircraft is at a cell edge, is given by:

$$2Tp \ (250 \text{ km}) = (2 \text{ x } 250 \text{ km})/\text{speed-of-light} \approx 1.67 \text{ milliseconds} \quad (3)$$

Assuming an expanded cell radius of three-hundred fifty (350) kilometers (km), the round trip propagation delay when an aircraft is at a cell edge, is given by:

$$2Tp \ (350 \text{ km}) = (2 \text{ x } 350 \text{ km})/\text{speed-of-light} \approx 2.33 \text{ milliseconds} \quad (4)$$

The 3GPP LTE specification, however, is limited to a smaller guard period duration (e.g., 0.714 milliseconds) to support a maximum one-hundred (100) kilometer cell radius. Based on equation (1), for a two-hundred fifty (250) kilometer cell radius, the guard period is computed as follows:

$$T_{GP} > 1.67 \text{ milliseconds} + T_{UE-Rx-Tx} \quad (5)$$

For a three-hundred fifty (350) kilometer cell radius, the guard period is computed as follows:

$$T_{GP} > 2.33 \text{ milliseconds} + T_{UE-Rx-Tx} \quad (6)$$

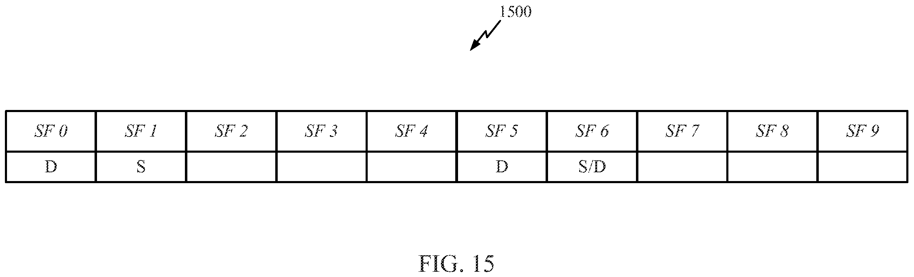

FIGURE 15 is a block diagram illustrating a modified radio frame structure 1500 according to one aspect of the present disclosure. This configuration of the modified radio frame structure 1500 maintains the 3GPP synchronization/broadcast channel structure shown in FIGURE 14. In this configuration, subframes 0, 1, 5 and 6 are either downlink or special subframes to allow primary synchronization signal (PSS), secondary synchronization signal (SSS), broadcast control channel (BCCH), dynamic broadcast channel (D-BCH) and system information block of type 1 (SIB1) transmissions. Maintaining the 3GPP synchronization/broadcast channel structure shown in FIGURE 14 avoids complex hardware changes.

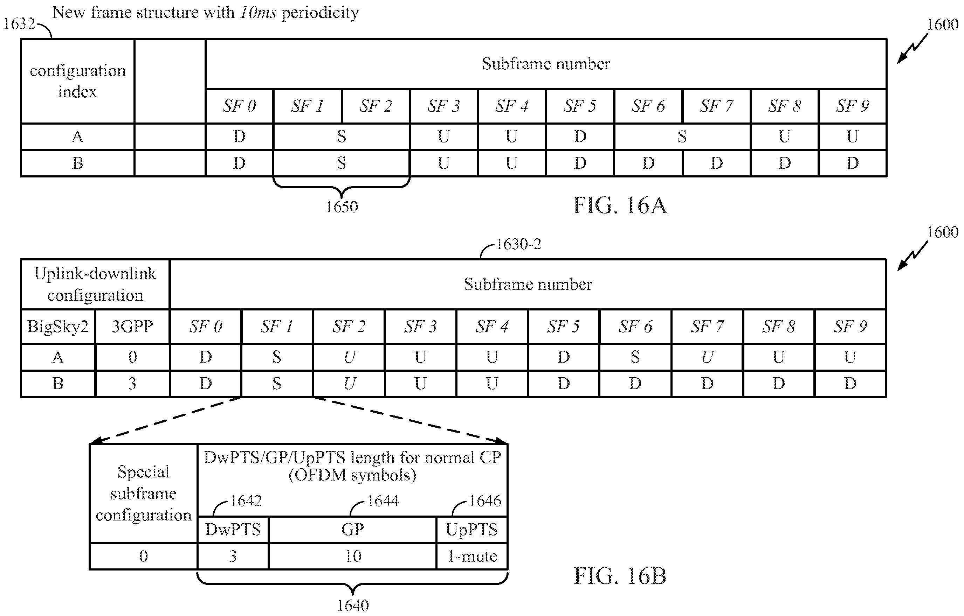

FIGURE 16A is a block diagram illustrating one configuration of a TD-LTE radio frame structure with a first extended special subframe (e.g., two (2) milliseconds) to support a first extended cell radius on the order of two-hundred fifty (250) kilometers. The frame structure 1600 has a ten (10) millisecond periodicity that includes an extended special subframe 1650 that extends over subframe 1 and subframe 2. This frame structure 1600 supports Next-Gen AG system configurations A and B, as noted by the configuration index 1632. In this configuration, the Next-Gen AG system configuration A is based on uplink-downlink configuration zero (0), as shown in FIGURE 12. In addition, the Next-Gen AG system configuration B is based on uplink-downlink configuration three (3), as shown in FIGURE 12.

FIGURE 16B further illustrates a modified special subframe 1640 to enable formation of the extended special subframe 1650 shown in FIGURE 16A. The modified special subframe 1640 includes a downlink pilot time slot (DwPTS) portion 1642 and a guard period (GP) portion 1644. An uplink pilot time slot (UpPTS) portion 1646 and the adjacent uplink subframe (e.g., SF 2 and/or SF 7) are omitted (muted) to extend the guard period (GP) portion 1644 to form the extended special subframe 1650 (FIGURE 16A). For example, the guard period (GP) portion 1644 may be combined with a GP portion of a muted, adjacent uplink subframe (e.g., SF 2, SF 7 and SF 12) to provide a twenty five (25) OFDM symbol length (e.g. 1.785 ms), depending on whether a normal or extended cyclic prefix is used. In this configuration, the DwPTS portion 1642 of the modified special subframe 1640 is treated as a regular, but shortened downlink subframe. For example, the DwPTS portion 1642 may have a three (3) OFDM symbol length, used to transmit a reference signal (RS), control information, a primary synchronization signal (PSS), and the like.

In this configuration, special subframe configuration zero (0) is applied while muting the UpPTS portion 1646. For example, the UpPTS portion 1646 may be muted by not scheduling any sounding reference signals. In Next Gen AG system configuration B, uplink subframe 2, adjacent to special subframe 1 is muted to provide the extended special subframe 1650 as a two (2) millisecond extended special subframe. In this example, the uplink subframe 2 is muted by not scheduling any uplink data transmissions during uplink subframe 2. Muting the uplink subframe 2 may also involve moving any acknowledgement (ACK)/negative acknowledgement (NACK) feedback to a next suitable subframe. Also, any channel quality information (CQI), precoding matrix indicator, and/or rank indicator information is not reported during the uplink subframe 2. In addition, no sounding reference signal (SRS), scheduling request (SR), and/or physical random access channel (PRACH) transmission are performed during the uplink subframe 2. In Next-Gen AG system configuration A, both uplink subframe 2, adjacent to special subframe 1, and uplink subframe 7, adjacent to special subframe 6 are muted to provide the extended special subframe 1650.

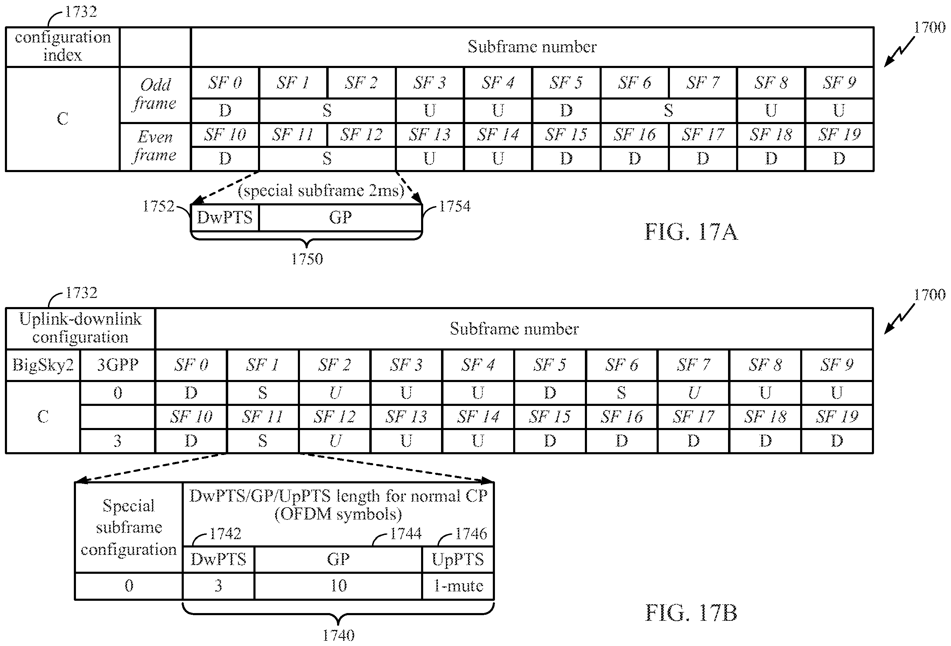

FIGURE 17A illustrates another configuration of a TD-LTE frame structure 1700 with a first extended special subframe (e.g., two (2) milliseconds) also specified to support the first extended cell radius (e.g., two-hundred (200) to two-hundred fifty (250) kilometers). The TD-LTE frame structure 1700 has a twenty (20) millisecond periodicity with an extended special subframe 1750 that extends over special subframe 1 and uplink subframe 2. In this configuration, the extended special subframe 1750 includes a downlink pilot time slot (DwPTS) portion 1752 and an extended guard period (GP) portion 1754. This TD-LTE frame structure 1700 supports Next-Gen AG system configuration C, as noted by the configuration index 1732. In this configuration, the Next-Gen AG system configuration C dynamically switches between uplink-downlink configuration zero (0), and uplink-downlink configuration three (3), as shown in FIGURE 12. For example, even subframes may use uplink-downlink configuration zero (0) and odd subframes may use uplink-downlink configuration three (3).

FIGURE 17B further illustrates a modified special subframe 1740 to enable formation of the extended special subframe 1750, shown in FIGURE 17A. The modified special subframe 1740 includes a downlink pilot time slot (DwPTS) portion 1742 and a guard period (GP) portion 1744. An uplink pilot time slot (UpPTS) portion 1746 and an adjacent uplink subframe (e.g., SF 2, SF 7 and/or SF 12) are omitted (e.g., muted) to extend the guard period (GP) portion 1744 to form the extended special subframe 1750 (FIGURE 17A). In this configuration, the DwPTS portion 1742 of the modified special subframe 1740 is treated as a regular, but shortened downlink subframe. For example, the DwPTS portion 1742 may have a three (3) OFDM symbol length to transmit a reference signal (RS), control information, a primary synchronization signal (PSS), and the like. In this example, the guard period (GP) portion 1744 may be combined with a GP portion of a muted, adjacent uplink subframe (e.g., SF 2, SF 7 and SF 12) to provide a twenty five (25) OFDM symbol length (e.g. 1.785 ms). In one configuration, a maximum timing advance of approximately 1.67 milliseconds is applied at the base station (e.g., an eNodeB 610) to synchronize communication.

In this configuration, special subframe configuration zero (0) is also applied while muting the UpPTS portion 1746. The UpPTS portion 1746 may be muted by not scheduling any sounding reference signals. For example, the uplink subframe 2, adjacent to special subframe 1 is muted to provide the extended special subframe 1750 as a two (2) millisecond extended special subframe. The uplink subframe 2 may be muted by not scheduling any uplink data transmissions during uplink subframe 2. Muting the uplink subframe 2 may also involve moving any acknowledgement (ACK)/negative acknowledgement (NACK) feedback to a next suitable subframe. Also, any channel quality information (CQI), precoding matrix indicator, and/or rank indicator information is not reported during uplink subframe 2. In addition, no sounding reference signal (SRS), scheduling request (SR), and/or physical random access channel (PRACH) transmission are performed during uplink subframe 2.

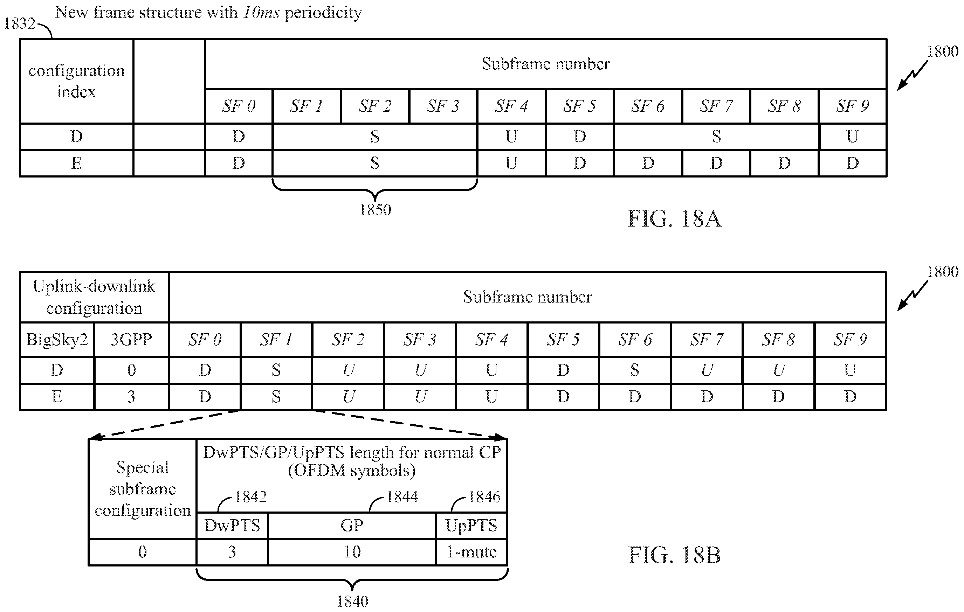

FIGURE 18A illustrates another configuration of a TD-LTE frame structure 1800 with a second extended special subframe (e.g., three (3) milliseconds) specified to support a second extended cell radius on the order of three-hundred (300) to three-hundred fifty (350) kilometers. The TD-LTE frame structure 1800 has a ten (10) millisecond periodicity with an extended special subframe 185 that extends over subframe 1, subframe 2 and subframe 3. In this configuration, the extended special subframe 1850 includes a downlink pilot time slot (DwPTS) portion 1852 and an extended guard period (GP) portion 1854. This TD-LTE frame structure 1800 supports Next-Gen AG system configurations D and E, as noted by the configuration index 1832. In this configuration, the Next-Gen AG system configuration D is based on uplink-downlink configuration zero (0), as shown in FIGURE 12. In addition, the Next-Gen AG system configuration E is based on uplink-downlink configuration three (3), as shown in FIGURE 12.

FIGURE 18B illustrates a modified special subframe 1840 to enable formation of the extended special subframe 1850, shown in FIGURE 18A. The modified special subframe 1840 also includes a downlink pilot time slot (DwPTS) portion 1842 and a guard period (GP) portion 1844. An uplink pilot time slot (UpPTS) portion 1846 and the two contiguous, adjacent uplink subframes (e.g., SF 2 and SF 3, SF 7 and SF 8) are omitted (e.g., muted) to extend the guard period (GP) portion 1844 to form the extended special subframe 1850 (FIGURE 18A). For example, the guard period (GP) portion 1844 may be combined with a GP portion of a muted, adjacent uplink subframe (e.g., SF 2 and SF 3, SF 7 and SF 8) to provide a thirty nine (39) OFDM symbol length (e.g. 2.72 milliseconds). In this configuration, the DwPTS portion 1842 of the modified special subframe 1840 is also treated as a regular, but shortened downlink subframe. For example, the DwPTS portion 1842 may have a three (3) OFDM symbol length to transmit a reference signal (RS), control information, a primary synchronization signal (PSS), and the like.

In this configuration, special subframe configuration zero (0) is also applied while muting the UpPTS portion 1846. In this example, the UpPTS portion 1846 is muted by not scheduling any sounding reference signals. Representatively, uplink subframe 2 and uplink subframe 3 adjacent to special subframe 1 are muted to provide the extended special subframe 1850 as a three (3) millisecond extended special subframe. In this example, uplink subframe 2 and uplink subframe 3 are muted by not scheduling any uplink data transmissions during uplink subframes 2 and 3. Muting uplink subframes 2 and 3 may also involve moving any acknowledgement (ACK)/negative acknowledgement (NACK) feedback to a next suitable subframe. Also, any channel quality information (CQI), precoding matrix indicator, and/or rank indicator information is not reported during uplink subframes 2 and 3. In addition, no sounding reference signal (SRS), scheduling request (SR), and/or physical random access channel (PRACH) transmission are performed during the uplink subframes 2 and 3.

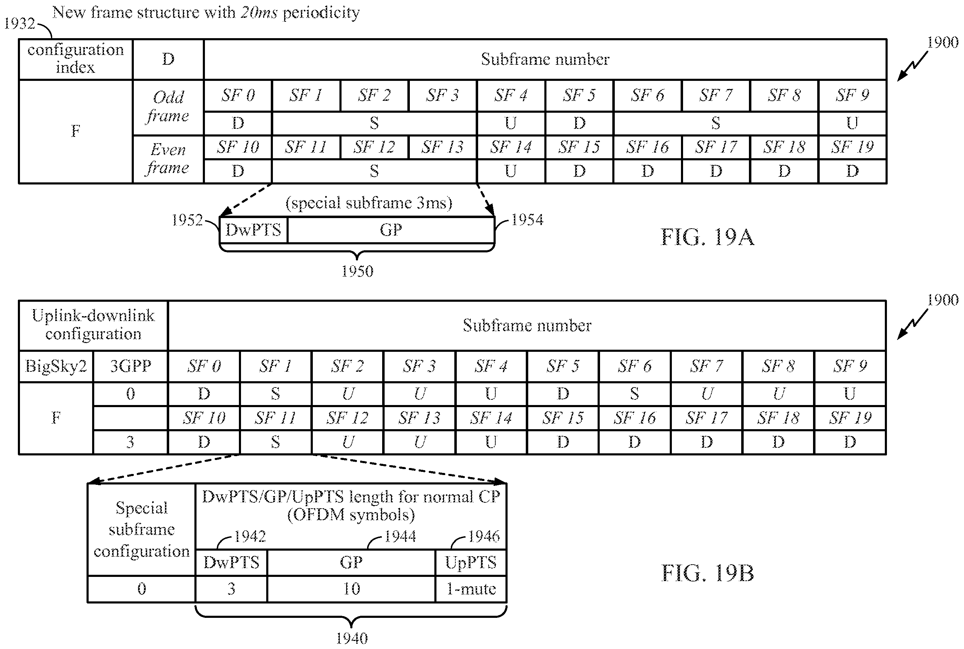

FIGURE 19A illustrates another configuration of a TD-LTE frame structure 1900 with a three (3) millisecond special subframe specified to support the second extended cell radius (e.g., three-hundred fifty (350) to four-hundred (400) kilometers). The TD-LTE frame structure 1900 has a twenty (20) millisecond periodicity with an extended special subframe 1950 that extends over subframes 1 to 3, 6 to 8 and 11 to 13. In this configuration, the extended special subframe 1950 includes a downlink pilot time slot (DwPTS) portion 1952 and an extended guard period (GP) portion 1954. This TD-LTE frame structure 1900 supports Next-Gen AG system configuration F, as noted by the configuration index 1932. In this configuration, the Next-Gen AG system configuration F dynamically switches between uplink-downlink configuration zero (0), and uplink-downlink configuration three (3), as shown in FIGURE 12. For example, even subframes may use uplink-downlink configuration zero (0) and odd subframes may use uplink-downlink configuration three (3).

FIGURE 19B illustrates a modified special subframe 1940 to enable formation of the extended special subframe 1950, shown in FIGURE 19A. The modified special subframe 1940 includes a downlink pilot time slot (DwPTS) portion 1942 and a guard period (GP) portion 1944. An uplink pilot time slot (UpPTS) portion 1946 and the two contiguous, adjacent uplink subframes (e.g., SF 2 and SF 3, SF 7 and SF 8, SF 12 and SF 13) are omitted (e.g., muted) to extend the guard period (GP) portion 1944 to form the extended special subframe 1950 (FIGURE 19A). In this configuration, the DwPTS portion 1942 of the modified special subframe 1940 is treated as a regular, but shortened downlink subframe. For example, the DwPTS portion 1942 may have a three (3) OFDM symbol length, used to transmit a reference signal (RS), control information, a primary synchronization signal (PSS), and the like. In this example, the guard period (GP) portion 1944 may be combined with a GP portion of a muted, adjacent uplink subframe (e.g., SF 2 and SF 3, SF 7 and SF 8, SF 12 and SF 13) to provide a thirty nine (39) OFDM symbol length (e.g. 2.72 milliseconds). In one configuration, a maximum timing advance of approximately 2.66 milliseconds is applied at the base station (e.g., an eNodeB 610) to synchronize communication.

In this configuration, special subframe configuration zero (0) is also applied while muting the UpPTS portion 1946. The UpPTS portion 1946 may be muted by not scheduling any sounding reference signals. For example, uplink subframes 2 and 3 adjacent to special subframe 1 are muted to provide the extended special subframe 1950 as a three (3) millisecond extended special subframe. In addition, uplink subframes 7 and 8 as well as uplink subframes 12 and 13 are muted. Uplink subframe 2 and 3, 7 and 8, and 12 and 13 may be muted by not scheduling any uplink data transmissions during these uplink subframes. Muting these uplink subframes may also involve moving any acknowledgement (ACK)/negative acknowledgement (NACK) feedback to a next suitable subframe. Also, any channel quality information (CQI), precoding matrix indicator, and/or rank indicator information is not reported during these uplink subframes. In addition, no sounding reference signal (SRS), scheduling request (SR), and/or physical random access channel (PRACH) transmission are performed during these uplink subframes.

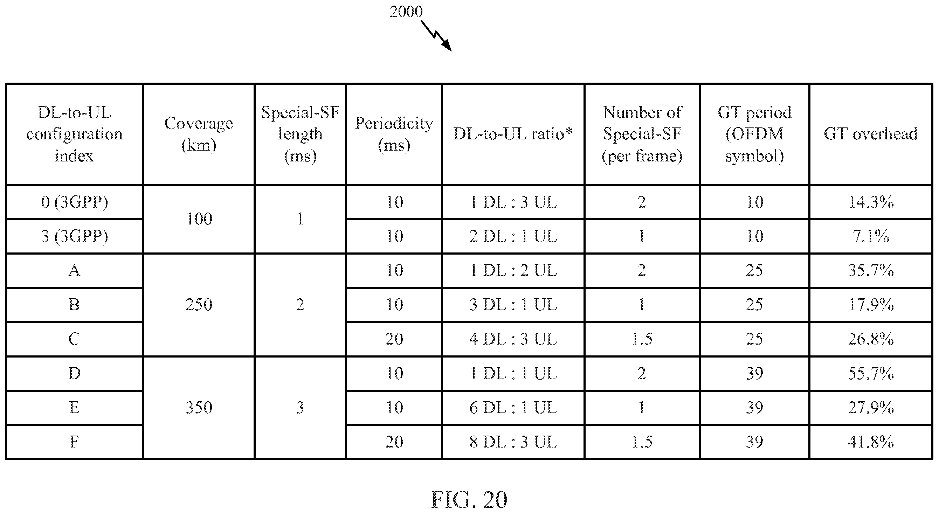

FIGURE 20 is a table 2000 of the guard time overhead associated with the Next-Gen AG system configurations for supporting the first extended cell radius and the second extend cell radius as compared to a conventional (non-extended) cell radius. As noted above, the 3GPP LTE specification is limited to a guard time duration of approximately 0.72 milliseconds (e.g., 10 OFDM symbols). This guard period duration presumes a maximum one-hundred (100) kilometer cell radius, referred to herein as a non-extended cell radius. In a Next-Gen AG system, however, extended cell radii (e.g., a cell radius of two-hundred fifty (250) to three hundred fifty (350) kilometers) are specified. A guard time for a first extended cell radius (e.g., two-hundred fifty (250) kilometers) is approximately 1.78 milliseconds (e.g., twenty five (25) OFDM symbols). A guard time for a second extended cell radius (e.g., three-hundred fifty (350) kilometers) is approximately 2.72 milliseconds (e.g., thirty nine (39) OFDM symbols).

The table 2000 illustrates that supporting extended cell radii results in reduced system throughput as noted by the guard time (GT) overhead column. The system throughput loss due to the guard time overhead is in proportion to the coverage range (1:2.5:3.5). Supporting the extended cell radii involves a tradeoff between system throughput, uplink/downlink fairness (see DL-to-UL ratio column) and implementation complexity. The table 2000 illustrates that the Next-Gen AG system configurations B and F involve less guard time overhead, but with an unbalanced ratio of downlink/uplink flows. In addition, complexity varies between implementing an extended special subframe with a ten (10) millisecond periodicity and an extended special subframe with a twenty (20) millisecond periodicity. It should be noted that the DL-to-UL ratio column of the table 2000 does not include DwPTS in the special subframe.

In a further configuration, a nested frame structure provides co-existence between different uplink-downlink subframe configurations. In one aspect of the present disclosure, air cells may be categorized into multiple zones based on the distance to a base station (e.g., an eNodeB 610). In this aspect of the disclosure, different uplink/downlink subframe configurations corresponding to different round-trip propagation delays may be used to accommodate communication with each of the multiple zones.

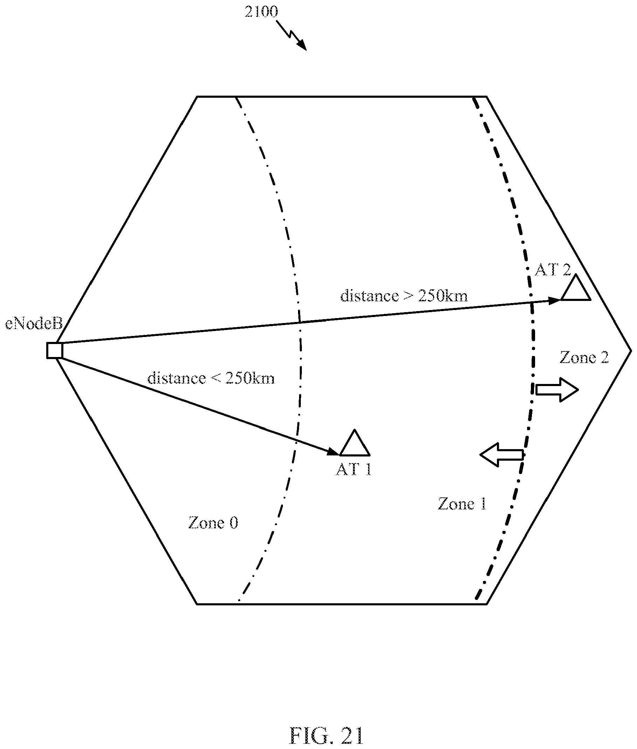

FIGURE 21 illustrates categorization of an air cell 2100 into multiple zones to support extended cell radii according to one aspect of the present disclosure. In this configuration, the air cell 2100 includes an non-extended zone (Zone 0) for aircraft transceivers (ATs) that are less than eighty (80) to one-hundred (100) kilometers from a base station (e.g., eNodeB). The air cell 2100 also includes a first extended zone (Zone 1) for aircraft transceivers (ATs) that are less than two-hundred (200) to two-hundred fifty (250) kilometers from a base station (e.g., eNodeB). The air cell 2100 further includes a second extended zone (Zone 2) for aircraft transceivers (ATs) that are greater than two-hundred (200) to two-hundred fifty (250) kilometers from a base station (e.g., eNodeB). In this example, a first aircraft transceiver AT 1 is in the first zone (Zone 1) and a second aircraft transceiver AT 2 is in the second zone (Zone 2). In another scenario, the Airborne Object could be within Zone 0, and thus does not apply extended special subframe at all. In this scenario, the nested frame structure could dynamically change from applying an extended special subframe to applying a non-extended special subframe in co-ordination with a base station.

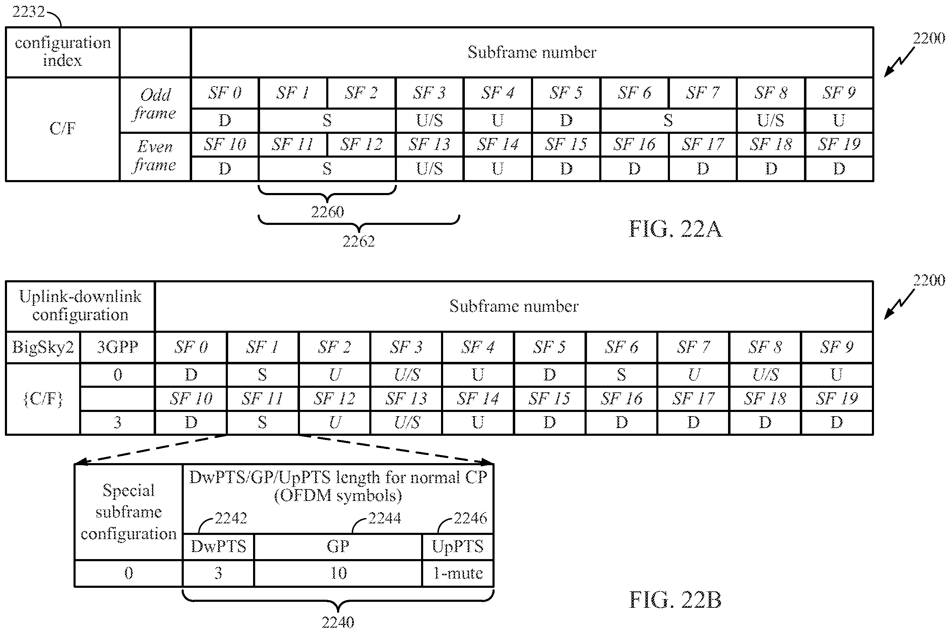

Categorizing the air cell 2100 into multiple zones to support extended cell radii involves a tradeoff between system capacity and cell coverage. Using a two (2) millisecond extended special subframe (FIGURES 16A-17B) involves less guard time overhead (e.g., reasonable system throughput), but cell coverage is limited to 250 kilometers. Using a three (3) millisecond extended special subframe (FIGURES 18A-19B) provides larger cell coverage with less system throughput (e.g., more guard time overhead). By subdividing the air cell 2100 into multiple zones, one aspect of the present disclosure enables coexistence between the two (2) millisecond extended special subframe and the three (3) millisecond extended special subframe by providing a nested frame structure, for example, as shown in FIGURES 22A and 22B. Although described with reference to specific distances, the various zones of the present disclosure are not limited to these specific distances.

Referring again to FIGURE 21, in one configuration, the base station (eNodeB) applies the two (2) millisecond extended special subframe when an aircraft transceiver (AT) is detected with a first extended cell radius. For example, the eNodeB applies a first extended special subframe (e.g., Next-Gen AG system configuration C) for communication with AT 1, which is detected within Zone 1. Similarly, the eNodeB applies a second extended special subframe (e.g., Next-Gen AG system configuration F) for communication with AT 2, which is detected within Zone 2. Based on this configuration, most aircraft are within Zone 1 and operate with high system capacity by using the first extended special subframe. Conversely, only a few cell-edge aircrafts are within Zone 2 in which a longer guard time is applied to prevent overlap between downlink and uplink transmissions.

FIGURE 22A is a block diagram illustrating a nested frame structure 2200 according to one aspect of the present disclosure. This configuration of a nested frame structure 2200 enables support for both a first extended special subframe 2260 and a second extended special subframe 2262. The nested frame structure 2200 may switch between a first extended special subframe 2260 that extends over subframes SF 1 and SF 2 (SF 6 and SF 7, SF 11 and SF 12) and a second extended special subframe 2262 that extends over subframes SF 1 to SF 3 (SF 6 to SF 8 and SF 11 to SF 13). This nested frame structure 2200 supports switching between Next-Gen AG system configurations C and F, as noted by the configuration index 2232. In this configuration, the Next-Gen AG system configurations C and F dynamically switch between uplink-downlink configuration zero (0) and uplink-downlink configuration three (3), as shown in FIGURE 12. For example, even subframes may use uplink-downlink configuration zero (0) and odd subframes may use uplink-downlink configuration three (3).

FIGURE 22B further illustrates an extended special subframe 2240 according to another aspect of the present disclosure. The extended special subframe 2240 includes a downlink pilot time slot (DwPTS) portion 2242 and a guard period (GP) portion 2244. An uplink pilot time slot (UpPTS) portion 2246 is omitted (e.g., muted) to extend the guard period (GP) portion 2244 of the extended special subframe 2240. In this configuration, the DwPTS portion 2242 of the extended special subframe 2240 is treated as a regular, but shortened downlink subframe.

In this configuration, the special subframe configuration zero (0) is also applied while muting the UpPTS portion 2246. The UpPTS portion 2246 may be muted by not scheduling any sounding reference signals. In this example, when an aircraft is in Zone 1, uplink subframes SF 2, SF 7 and SF 12 are muted to provide the extended special subframe 2240. In this example the extended special subframe is configured as the first extended special subframe 2250 having a two (2) millisecond duration, as shown in FIGURE 22A. In addition, when an aircraft is in Zone 2, uplink subframes SF 2 and SF 3, SF 7 and SF 8, as well as uplink subframes SF 12 and SF 13 are muted to provide the second extended special subframe 2252 having a three (3) millisecond duration, as shown in FIGURE 22A.

The uplink subframes may be muted by not scheduling any uplink data transmissions during these uplink subframes. Muting these uplink subframes may also involve moving any acknowledgement (ACK)/negative acknowledgement (NACK) feedback to a next suitable subframe. Also, any channel quality information (CQI), precoding matrix indicator, and/or rank indicator information is not reported during these uplink subframes. In addition, no sounding reference signal (SRS), scheduling request (SR), and/or random access channel (RACH) transmission are performed during these uplink subframes.

FIGURE 23 illustrates a further categorization of air cells 2300 (2300-1, 2300-2 and 2300-3) into multiple zones to support extended cell radii according to one aspect of the present disclosure. In this configuration, the air cells 2300 include a first zone (Zone 1) for aircraft transceivers (ATs) that are less than two-hundred fifty (250) kilometers from a base station (e.g., eNodeB). The air cells 2300 also include a second zone (Zone 2) for aircraft transceivers (ATs) that are greater than two-hundred fifty (250) kilometers from a base station (e.g., eNodeB). In this example, a first aircraft transceiver AT 1 is in a first zone (Zone 1) of a first air cell 2300-1, and a second aircraft transceiver AT 2 is in a second zone (Zone 2) at a cell-edge of a third air cell 2300-3.

Using the nested frame structure 2200 by a base station involves categorization of aircraft within the various zones of the air cells 2300. The base station uses the instantaneous location of all serving aircraft to categorize the aircraft within the various zones of the air cells 2300. In one configuration, position location logic at each served aircraft transceiver (AT) communicates a zone index to the base station via a physical uplink shared channel (PUSCH), a physical uplink control channel (PUCCH), a physical uplink random access channel (PRACH) or other like uplink channels. In another configuration, position location logic of the base station computes a zone index of each served aircraft transceiver (AT). The position location logic may be a global position system (GPS), differential GPS, or other position detection scheme.

In this example, the first air cell 2300-1 is supported by eNodeB A, the second air cell 2300-2 is supported by eNodeB B, and the third air cell 2300-2 is supported by eNodeB C. In addition, a first aircraft transceiver AT 1 is less than two-hundred fifty (250) kilometers from the eNodeB A, while a second aircraft transceiver AT 2 is greater than two-hundred fifty (250) kilometers from eNodeB C at the cell-edge of the third air cell 2300-3. Due to the increased timing advance applied at the base station for supporting the extended special subframes, uplink transmissions from aircrafts (e.g., AT 1) in Zone 1 may generate interference to neighbor cell's downlink transmission to aircraft (e.g., AT 2) in Zone 2.

In this configuration, uplink-to-downlink interference is mitigated by the directional antenna pattern at AT 1 and AT 2. That is, the interference over thermal noise (IoT) is quite small due to the roll-off in azimuth and elevation angle of the aircraft antenna relative to the boresight. In another configuration, the size of Zone 1 is reduced to avoid the uplink-to-downlink overlap. In a further configuration, the base station adjusts the uplink scheduling depending on the aircraft location. In this example, uplink transmission of AT 1 in Zone 1 are scheduled in subframes SF 3, SF 4, SF 8, SF 9, SF 13 and SF 14, as shown in FIGURE 22. When AT 2 is in Zone 2, subframes SF 3, SF 8 and SF 13 are muted.

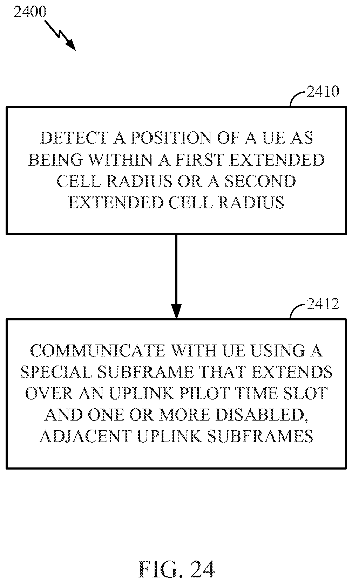

FIGURE 24 illustrates a method 2400 for modification of a time division long term evolution (TD-LTE) frame structure according to an aspect of the present disclosure. At block 2410, a position of a UE is detected as being within a first extended cell radius or a second extended cell radius outside of a non-extended cell radius (e.g., less than one-hundred (100) kilometers). For example, a first extended cell radius may be greater than one-hundred (100) kilometers and less than or equal to two-hundred fifty kilometers. A second extended cell radius may be greater than two-hundred fifty kilometers. In block 2412, an eNodeB communicates with the UE using a special subframe that extends over an uplink pilot time slot and one or more disabled, adjacent uplink subframes. For example, the eNodeB may communicate using a first extended special subframe when the position of the UE is within the first extended cell radius. In this example, (see FIGURES 16A to 17B) the eNodeB may also communicate using a second extended special subframe (see FIGURES 18A to 19B) when the position of the UE is within the second extended cell radius. In this example, a length of the second extended special subframe is greater than a length of the first extended special subframe because the second extended cell radius is greater than the first extended cell radius.

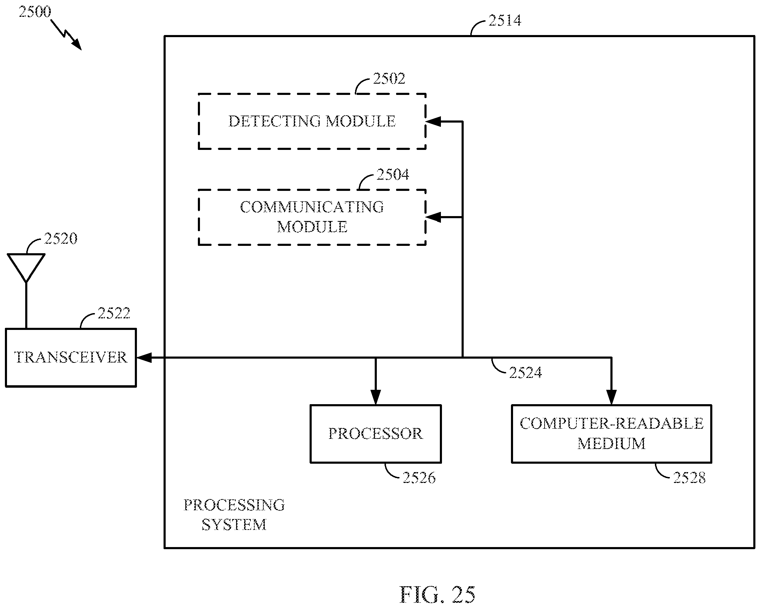

FIGURE 25 is a diagram illustrating an example of a hardware implementation for an apparatus 2500 employing a Next-Gen AG system 2514 according to one aspect of the present disclosure. The Next-Gen AG system 2514 may be implemented with a bus architecture, represented generally by a bus 2524. The bus 2524 may include any number of interconnecting buses and bridges depending on the specific application of the Next-Gen AG system 2514 and the overall design constraints. The bus 2524 links together various circuits including one or more processors and/or hardware modules, represented by a processor 2526, a detecting module 2502, a communicating module 2504, and a computer-readable medium 2528. The bus 2524 may also link various other circuits such as timing sources, peripherals, voltage regulators, and power management circuits, which are well known in the art, and therefore, will not be described any further.

The apparatus includes a Next-Gen AG system 2514 coupled to a transceiver 2522. The transceiver 2522 is coupled to one or more antennas 2520. The transceiver 2522 provides a means for communicating with various other apparatus over a transmission medium. The Next-Gen AG system 2514 includes the processor 2526 coupled to the computer-readable medium 2528. The processor 2526 is responsible for general processing, including the execution of software stored on the computer-readable medium 2528. The software, when executed by the processor 2526, causes the Next-Gen AG system 2514 to perform the various functions described supra for any particular apparatus. The computer-readable medium 2528 may also be used for storing data that is manipulated by the processor 2526 when executing software.

The Next-Gen AG system 2514 further includes the detecting module 2502 for detecting a position of a UE as being within a first extended cell radius or a second extended cell radius. The Next-Gen AG system 2514 further includes the communicating module 2504 for communicating with the UE using a special subframe that extends over an uplink pilot time slot and one or more disabled, adjacent uplink subframes. The detecting module 2502 and the communicating module 2504 may be software modules running in the processor 2526, resident/stored in the computer-readable medium 2528, one or more hardware modules coupled to the processor 2526, or some combination thereof. The Next-Gen AG system 2514 may be a component of the eNodeB 610 and/or the UE 650.

In one configuration, the apparatus 2500 for wireless communication includes means for detecting and means for communicating. The means may be the detecting module 2502, the communicating module 2504 and/or the Next-Gen AG system 2514 of the apparatus 2500 configured to perform the functions recited by the detecting means and the communicating means. In one aspect of the present disclosure, the detecting means may be the controller/processor 675 and/or memory 676 configured to perform the functions recited by the detecting means. In this aspect of the disclosure, the communicating means may be the controller/processor 675 and/or memory 676, the transmit processor 616, and/or the transmitter 618 TX configured to perform the functions recited by the communicating means. In another aspect, the aforementioned means may be any module or any apparatus configured to perform the functions recited by the aforementioned means.

The examples above describe aspects implemented in a TD-LTE system. Nevertheless, the scope of the disclosure is not so limited. Various aspects may be adapted for use with other communication systems, such as those that employ any of a variety of communication protocols including, but not limited to, CDMA systems, TDMA systems, FDMA systems, and OFDMA systems.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with the principles and novel features disclosed herein. The scope of the invention is defined in the appended claims.

**Claims**

1. A method of wireless communication, implemented by a user equipment, using a TD-LTE frame structure (2200), comprising:

   communicating with a base station (204) using the TD-LTE frame structure (2200) with an extended special subframe (2260);
   alternating between different uplink/downlink subframe configurations using a first extended special subframe (2260) and a second extended special subframe (2262), which are formed by disabling an uplink pilot time slot and one or more adjacent uplink subframes, by dynamically switching between said different uplink/downlink configurations;
   wherein communicating with the base station comprises using the first extended special subframe (2260) or the second extended special subframe (2262) based on a position of the user equipment, UE (206) with respect to the base station;
   wherein a length of the first extended special subframe (2260) is less than the length of the second extended special subframe (2262).

2. The method of claim 1, further comprises communicating using the first extended special subframe (2260) when the position of the user equipment, UE (206), is within a first predetermined cell radius greater than a predetermined threshold radius.

3. The method of claim 2, further comprises communicating using the second extended special subframe (2262) when the position of the UE (206) is within a second predetermined cell radius that is greater than the first predetermined cell radius.

4. The method of claim 1, further comprising dynamically adjusting a subframe at which to begin uplink communication by muting the uplink pilot time slot and the adjacent uplink subframe.

5. The method of claim 1, in which an extended timing advance is applied to the extended special subframe.

6. The method of claim 1, in which the method is performed within an aircraft (750-1, 750-2).

7. The method of claim 1, wherein alternating between uplink/downlink subframe configurations using a first extended special subframe (2260) and a second extended special subframe (2262) comprises using a first TD-LTE uplink downlink configuration in even subframes of the frame structure (2200) and using a second, different TD-LTE uplink downlink configuration in odd subframes of the frame structure (2200).

8. The method of claim 7, wherein the first TD-LTE uplink downlink configuration is configuration zero and the second TD-LTE uplink downlink configuration is configuration three of the LTE standard.

9. A method of wireless communication, implemented by a base station, using a TD-LTE frame structure (2200), comprising:

   detecting a position of a user equipment, UE (206), as being within a first extended cell radius or a second extended cell radius;
   communicating with the UE using the TD-LTE frame structure (2200) with an extended special subframe (2260);
   alternating between different uplink/downlink subframe configurations using a first extended special subframe (2260) and a second extended special subframe (2262), which are formed by disabling an uplink pilot timeslot and one or more adjacent uplink subframes , by dynamically switching between said uplink/downlink subframe configurations; wherein communicating with the UE (206) comprises using the first extended special subframe (2260) or the second extended special subframe (2262) based on the position of the UE with respect to the base station;
   wherein a length of the first extended special subframe (2260) is less than the length of the second extended special subframe (2262).

10. The method of claim 9, further comprises communicating using the first extended special subframe (2260) when the position of the UE (206) is within the first extended cell radius greater than a predetermined threshold radius.

11. The method of claim 9, further comprises communicating using the second extended special subframe (2262) when the position of the UE (206) is within the second extended cell radius, which is greater than the first extended cell radius.

12. The method of claims 9, wherein alternating between uplink/downlink subframe configurations using at least a first extended special subframe (2260) and a second extended special subframe (2262) comprises using a first TD-LTE uplink/downlink configuration in even subframes of the frame structure (2200) and using a second, different TD-LTE uplink/downlink configuration in odd subframes of the frame structure (2200).

13. An user equipment apparatus for wireless communication using a TD-LTE frame structure (2200), comprising:

   means for communicating with a base station (204) configured to use the TD-LTE frame structure with an extended special subframe;
   means for alternating between different uplink/downlink subframe configurations using a first extended special subframe (2260) and a second extended special subframe (2262), which are formed by disabling an uplink pilot time slot and one or more adjacent uplink subframes, by dynamically switching between said different uplink/downlink configurations;
   wherein the means for communicating with the base station are configured to use the first extended special subframe (2260) or the second extended special subframe (2262) based on a position of the apparatus with respect to the base station;
   wherein a length of the first extended special subframe (2260) is less than the length of the second extended special subframe (2262).

14. A base station apparatus for wireless communication using a TD-LTE frame structure (2200), comprising:

means for detecting a position of a user equipment, UE (206), as being within a first extended cell radius or a second extended cell radius; and

means for communicating with the UE (206) using the TD-LTE frame structure (2200) with an extended special subframe (2260);

means for alternating between different uplink/downlink subframe configurations using a first extended special subframe (2260) and a second extended special subframe (2262), which are formed by disabling an uplink pilot time slot and one or more adjacent uplink subframes, by dynamically switching between said different uplink/downlink configurations;

wherein the means for communicating with the UE are configured to use the first extended special subframe (2260) or the second extended special subframe (2262) based on the detected position of the UE (206) with respect to the apparatus; and

wherein a length of the first extended special subframe (2260) is less than the length of the second extended special subframe (2262).

15. A computer program product configured for wireless communications, the computer program product comprising: a non-transitory computer-readable medium having program code recorded thereon, the program code comprising instructions which, when the program code is executed by a computer, causes the computer to carry out the steps of any one of claims 1 to 12.

**Patentansprüche**

1. Ein Verfahren für Drahtloskommunikation, das durch eine Nutzereinrichtung implementiert wird, unter Verwendung einer TD-LTE-Rahmenstruktur (2200), das Folgendes aufweist:

Kommunizieren mit einer Basisstation (204) unter Verwendung der TD-LTE-Rahmenstruktur (2200) mit einem erweiterten speziellen Subrahmen (2260);

Wechseln bzw. Alternieren zwischen unterschiedlichen Uplink/Downlink- bzw. Aufwärtsstrecken/Abwärtsstrecken-Subrahmenkonfigurationen unter Verwendung eines ersten erweiterten speziellen Subrahmens (2260) und eines zweiten erweiterten speziellen Subrahmens (2262), welche gebildet werden durch Deaktivieren eines Aufwärtsstreckenpilotzeitschlitzes und eines oder mehrerer benachbarter bzw. angrenzender Aufwärtsstreckensubrahmen, durch dynamisches Schalten zwischen den unterschiedlichen Aufwärtsstrecken/Abwärtsstrecken-Konfigurationen;

wobei das Kommunizieren mit der Basisstation Verwenden des ersten erweiterten speziellen Subrahmens (2260) oder des zweiten erweiterten speziellen Subrahmens (2262) basierend auf einer Position der Nutzereinrichtung bzw. UE (UE = user equipment) (206) in Bezug auf die Basisstation aufweist;

wobei eine Länge des ersten erweiterten speziellen Subrahmens (2260) geringer ist als die Länge des zweiten erweiterten speziellen Subrahmens (2262).

2. Verfahren nach Anspruch 1, das weiter Kommunizieren unter Verwendung des ersten erweiterten speziellen Subrahmens (2260) aufweist, wenn die Position der Nutzereinrichtung bzw. UE (UE = user equipment) (206) innerhalb eines ersten vorbestimmten Zellenradius ist, der größer als ein vorbestimmter Schwellenwertradius ist.

3. Verfahren nach Anspruch 2, das weiter Kommunizieren unter Verwendung des zweiten erweiterten speziellen Subrahmens (2262) aufweist, wenn die Position der UE (206) innerhalb eines zweiten vorbestimmten Zellenradius ist, der größer als der erste vorbestimmte Zellenradius ist.

4. Verfahren nach Anspruch 1, das weiter dynamisches Anpassen eines Subrahmens aufweist, bei dem Aufwärtsstreckenkommunikation beginnen soll, durch Muting bzw. Stummschalten des Aufwärtsstreckenpilotzeitschlitzes und des angrenzenden bzw. benachbarten Aufwärtsstreckensubrahmens.

5. Verfahren nach Anspruch 1, in dem ein erweiterter Timing-Vorauslauf bzw. ein erweitertes Timing-Advance auf den erweiterten speziellen Subrahmen angewandt wird.

6. Verfahren nach Anspruch 1, in dem das Verfahren innerhalb eines Flugzeuges (750-1, 750-2) durchgeführt wird.

7. Verfahren nach Anspruch 1, wobei das Wechseln zwischen Aufwärtsstrecken/Abwärtsstrecken-Subrahmenkonfigurationen unter Verwendung eines ersten erweiterten speziellen Subrahmens (2260) und eines zweiten erweiterten speziellen Subrahmens (2262) Verwenden einer ersten TD-LTE-Aufwärtsstrecken-Abwärtsstrecken-Konfiguration in geraden Subrahmen der Rahmenstruktur (2200) aufweist und Verwenden einer zweiten anderen TD-LTE-Aufwärtsstrecken-Abwärtsstrecken-Konfiguration in ungeraden Subrahmen der Rahmenstruktur (2200) aufweist.

8. Verfahren nach Anspruch 7, wobei die erste TD-LTE-Aufwärtsstrecken-Abwärtsstrecken-Konfiguration Konfiguration Null ist und die zweite TD-LTE-Aufwärtsstrecken-Abwärtsstrecken-Konfiguration Konfiguration Drei des LTE-Standards ist.

9. Ein Verfahren zur Drahtloskommunikation, das durch eine Basisstation implementiert wird, unter Verwendung einer TD-LTE-Rahmenstruktur (2200), das Folgendes aufweist:

Detektieren einer Position einer Nutzereinrichtung bzw. UE (UE = user equipment) (206) als innerhalb eines ersten erweiterten Zellenradius oder eines zweiten erweiterten Zellenradius;
Kommunizieren mit der UE unter Verwendung der TD-LTE-Rahmenstruktur (2200) mit einem erweiterten speziellen Subrahmen (2260);
Wechseln bzw. Alternieren zwischen unterschiedlichen Uplink/Downlink- bzw. Aufwärtsstrecken/Abwärtsstrecken-Subrahmenkonfigurationen unter Verwendung eines ersten erweiterten speziellen Subrahmens (2260) und eines zweiten erweiterten speziellen Subrahmens (2262), die gebildet werden durch Deaktivieren eines Aufwärtsstreckenpilotzeitschlitzes und eines oder mehrerer benachbarter bzw. angrenzender Aufwärtsstreckensubrahmen,
durch dynamisches Schalten zwischen den Aufwärtsstrecken/Abwärtsstrecken-Subrahmenkonfigurationen;
wobei das Kommunizieren mit der UE (206) Verwenden des ersten erweiterten speziellen Subrahmens (2260) oder des zweiten erweiterten speziellen Subrahmens (2262) basierend auf der Position der UE in Bezug auf die Basisstation aufweist;
wobei eine Länge des ersten erweiterten speziellen Subrahmens (2260) geringer ist als die Länge des zweiten erweiterten speziellen Subrahmens (2262).

10. Verfahren nach Anspruch 9, das weiter Kommunizieren unter Verwendung des ersten erweiterten speziellen Subrahmens (2260) aufweist, wenn die Position der UE (206) innerhalb des ersten erweiterten Zellenradius größer als ein vorbestimmter Schwellenwertradius ist.

11. Verfahren nach Anspruch 9, das weiter Kommunizieren unter Verwendung des zweiten erweiterten speziellen Subrahmens (2262) aufweist, wenn die Position der UE (206) innerhalb des zweiten erweiterten Zellenradius ist, der größer als der erste erweiterte Zellenradius ist.

12. Verfahren nach Anspruch 9, wobei das Wechseln bzw. Alternieren zwischen Aufwärtsstrecken/Abwärtsstrecken-Subrahmenkonfigurationen unter Verwendung von wenigstens einem ersten erweiterten speziellen Subrahmen (2260) und einem zweiten erweiterten speziellen Subrahmen (2262) Verwenden einer ersten TD-LTE-Aufwärtsstrecken/Abwärtsstrecken-Konfiguration in geraden Subrahmen der Rahmenstruktur (2200) und Verwenden einer zweiten anderen TD-LTE-Aufwärtsstrecken/Abwärtsstrecken-Konfiguration in ungeraden Subrahmen der Rahmenstruktur (2200) aufweist.

13. Eine Nutzereinrichtungsvorrichtung für Drahtloskommunikation unter Verwendung einer TD-LTE-Rahmenstruktur (2200), die Folgendes aufweist:

Mittel zum Kommunizieren mit einer Basisstation (204), die konfiguriert ist zum Verwenden der TD-LTE-Rahmenstruktur mit einem erweiterten speziellen Subrahmen;
Mittel zum Wechseln bzw. Alternieren zwischen unterschiedlichen Uplink/Downlink- bzw. Aufwärtsstrecken/Abwärtsstrecken-Subrahmenkonfigurationen unter Verwendung eines ersten erweiterten speziellen Subrahmens (2260) und eines zweiten erweiterten speziellen Subrahmens (2262), welche gebildet werden durch Deaktivieren eines Aufwärtsstreckenpilotzeitschlitzes und eines oder mehrerer angrenzender Aufwärtsstreckensubrahmen, durch dynamisches Schalten zwischen den unterschiedlichen Aufwärtsstrecken/Abwärtsstrecken-Konfigurationen;
wobei die Mittel zum Kommunizieren mit der Basisstation konfiguriert sind zum Verwenden des ersten erweiterten speziellen Subrahmens (2260) oder des zweiten erweiterten speziellen Subrahmens (2262) basierend auf einer Position der Vorrichtung in Bezug auf die Basisstation;

wobei eine Länge des ersten erweiterten speziellen Subrahmens (2260) geringer ist als die Länge des zweiten erweiterten speziellen Subrahmens (2262).

14. Eine Basisstationsvorrichtung für Drahtloskommunikation unter Verwendung einer TD-LTE-Rahmenstruktur (2200), die Folgendes aufweist:

Mittel zum Detektieren einer Position einer Nutzereinrichtung bzw. UE (UE = user equipment) (206) als innerhalb eines ersten erweiterten Zellenradius oder eines zweiten erweiterten Zellenradius; und

Mittel zum Kommunizieren mit der UE (206) unter Verwendung der TD-LTE-Rahmenstruktur (2200) mit einem erweiterten speziellen Subrahmen (2260);

Mittel zum Wechseln bzw. Alternieren zwischen unterschiedlichen Uplink/Downlink- bzw. Aufwärtsstrecken/Abwärtsstrecken-Subrahmenkonfigurationen unter Verwendung eines ersten erweiterten speziellen Subrahmens (2260) und eines zweiten erweiterten speziellen Subrahmens (2262), die gebildet werden durch Deaktivieren eines Aufwärtsstreckenpilotzeitschlitzes und eines oder mehrerer benachbarter bzw. angrenzender Aufwärtsstreckensubrahmen, durch dynamisches Schalten zwischen den Aufwärtsstrecken/Abwärtsstrecken-Subrahmenkonfigurationen;

wobei die Mittel zum Kommunizieren mit der UE konfiguriert sind zum Verwenden des ersten erweiterten speziellen Subrahmens (2260) oder des zweiten erweiterten speziellen Subrahmens (2262) basierend auf der detektierten Position der UE (206) in Bezug auf die Vorrichtung; und

wobei eine Länge des ersten erweiterten speziellen Subrahmens (2260) geringer ist als die Länge des zweiten erweiterten speziellen Subrahmens (2262).

15. Ein Computerprogrammprodukt, das für Drahtloskommunikationen konfiguriert ist, wobei das Computerprogrammprodukt Folgendes aufweist:

ein nicht transitorisches computerlesbares Medium mit darauf aufgezeichnetem Programmcode, wobei der Programmcode Instruktionen aufweist, die, wenn der Programmcode durch einen Computer ausgeführt wird, den Computer veranlassen zum Durchführen der Schritte nach einem der Ansprüche 1 bis 12.

## Revendications

1. Procédé de communication sans fil, mis en oeuvre par un équipement d'utilisateur, utilisant une structure de trame TD-LTE (2200), comprenant :

communiquer avec une station de base (204) en utilisant la structure de trame TD-LTE (2200) avec une sous-trame spéciale étendue (2260) ;

alterner entre des configurations de sous-trames de liaison montante/liaison descendante différentes utilisant une première sous-trame spéciale étendue (2260) et une deuxième sous-trame spéciale étendue (2262), qui sont formées en désactivant un créneau temporel de pilote de liaison montante et une ou plusieurs sous-trames de liaison montante adjacentes, en commutant dynamiquement entre les différentes configurations de liaison montante/liaison descendante ;

dans lequel la communication avec la station de base comprend l'utilisation de la première sous-trame spéciale étendue (2260) ou de la deuxième sous-trame spéciale étendue (2262) en fonction d'une position de l'équipement d'utilisateur, UE, (206) par rapport à la station de base ;

dans lequel la longueur de la première sous-trame spéciale étendue (2260) est inférieure à la longueur de la deuxième sous-trame spéciale étendue (2262).

2. Procédé selon la revendication 1, comprenant en outre le fait de communiquer en utilisant la première sous-trame spéciale étendue (2260) lorsque la position de l'équipement d'utilisateur, UE (206), se trouve dans un premier rayon de cellule prédéterminé supérieur à un seuil de rayon prédéterminé.

3. Procédé selon la revendication 2, comprenant en outre le fait de communiquer en utilisant la deuxième sous-trame spéciale étendue (2262) lorsque la position de l'UE (206) est dans un deuxième rayon de cellule prédéterminé qui est supérieur au premier rayon de cellule prédéterminé.

4. Procédé selon la revendication 1, comprenant en outre un ajustement dynamique d'une sous-trame à laquelle doit commencer la communication en liaison montante en mettant au silence le créneau temporel de pilote de liaison montante et la sous-trame de liaison montante adjacente.

5. Procédé selon la revendication 1, dans lequel une avance temporelle étendue est appliquée à la sous-trame spéciale étendue.

6. Procédé selon la revendication 1, dans lequel le procédé est réalisé dans un aéronef (750-1, 750-2).

7. Procédé selon la revendication 1, dans lequel l'alternance entre des configurations de sous-trames de liaison montante/liaison descendante utilisant une première sous-trame spéciale étendue (2260) et une deuxième sous-trame spéciale étendue (2262) comprend l'utilisation d'une première configuration de liaison montante et de liaison descendante TD-LTE dans des sous-trames paires de la structure de trame (2200) et l'utilisation d'une deuxième configuration de liaison montante et de liaison descendante TD-LTE différente dans des sous-trames impaires de la structure de trame (2200).

8. Procédé selon la revendication 7, dans lequel la première configuration TD-LTE est une configuration zéro et la deuxième configuration TD-LTE est une configuration trois de la norme LTE.

9. Procédé de communication sans fil, mis en oeuvre par une station de base, utilisant une structure de trame TD-LTE (2200), comprenant :

détecter une position d'un équipement d'utilisateur, UE (206), comme étant dans un premier rayon de cellule étendu ou un deuxième rayon de cellule étendu ;
communiquer avec l'UE en utilisant la structure de trame TD-LTE (2200) avec une sous-trame spéciale étendue (2260) ;
alterner entre des configurations de sous-trames de liaison montante/liaison descendante différentes utilisant une première sous-trame spéciale étendue (2260) et une deuxième sous-trame spéciale étendue (2262), qui sont formées en désactivant un créneau temporel de pilote de liaison montante et une ou plusieurs sous-trames de liaison montante adjacentes, en commutant dynamiquement entre les configurations de sous-trames de liaison montante/liaison descendante ;
dans lequel la communication avec l'UE (206) comprend l'utilisation de la première sous-trame spéciale étendue (2260) ou de la deuxième sous-trame spéciale étendue (2262) en fonction de la position de l'UE par rapport à la station de base ;
dans lequel la longueur de la première sous-trame spéciale étendue (2260) est inférieure à la longueur de la deuxième sous-trame spéciale étendue (2262).

10. Procédé selon la revendication 9, comprenant en outre le fait de communiquer en utilisant la première sous-trame spéciale étendue (2260) lorsque la position de l'UE (206) est dans le premier rayon de cellule étendu supérieur à un seuil de rayon prédéterminé.

11. Procédé selon la revendication 9, comprenant en outre le fait de communiquer en utilisant la deuxième sous-trame spéciale étendue (2262) lorsque la position de l'UE (206) est dans le deuxième rayon de cellule étendue, qui est supérieur au premier rayon de cellule étendu.

12. Procédé selon la revendication 9, dans lequel l'alternance entre des configurations de sous-trames de liaison montante/liaison descendante utilisant au moins une première sous-trame spéciale étendue (2260) et une deuxième sous-trame spéciale étendue (2262) comprend l'utilisation d'une première configuration de liaison montante/liaison descendante TD-LTE dans des trames paires de la structure de trame (2200) et l'utilisation d'une deuxième configuration de liaison montante/liaison descendante TD-LTE différente dans des sous-trames impaires de la structure de trame (2200).

13. Dispositif d'équipement d'utilisateur pour des communications sans fil utilisant une structure de trame TD-LTE (2200), comprenant :

des moyens pour communiquer avec une station de base (204) agencée pour utiliser la structure de trame TD-LTE (2200) avec une sous-trame spéciale étendue ;
des moyens pour alterner entre des configurations de sous-trames de liaison montante/liaison descendante différentes utilisant une première sous-trame spéciale étendue (2260) et une deuxième sous-trame spéciale étendue (2262), qui sont formées en désactivant un créneau temporel de pilote de liaison montante et une ou plusieurs sous-trames de liaison montante adjacentes, en commutant dynamiquement entre les différentes configurations de liaison montante/liaison descendante ;

dans lequel les moyens pour communiquer avec la station de base sont agencés pour utiliser la première sous-trame spéciale étendue (2260) ou la deuxième sous-trame spéciale étendue (2262) en fonction d'une position du dispositif par rapport à la station de base ;

dans lequel la longueur de la première sous-trame spéciale étendue (2260) est inférieure à la longueur de la deuxième sous-trame spéciale étendue (2262).

14. Dispositif de station de base pour des communications sans fil utilisant une structure de trame TD-LTE (2200), comprenant :

des moyens pour détecter une position d'un équipement d'utilisateur, UE (206), comme étant dans un premier rayon de cellule étendu ou un deuxième rayon de cellule étendu ; et

des moyens pour communiquer avec l'UE (206) en utilisant la structure de trame TD-LTE (2200) avec une sous-trame spéciale étendue (2260) ;

des moyens pour alterner entre des configurations de sous-trames de liaison montante/liaison descendante différentes utilisant une première sous-trame spéciale étendue (2260) et une deuxième sous-trame spéciale étendue (2262), qui sont formées en désactivant un créneau temporel de pilote de liaison montante et une ou plusieurs sous-trames de liaison montante adjacentes, en commutant dynamiquement entre les configurations de sous-trames de liaison montante/liaison descendante ;

dans lequel les moyens pour communiquer avec l'UE sont agencés pour utiliser la première sous-trame spéciale étendue (2260) ou de la deuxième sous-trame spéciale étendue (2262) en fonction de la position détectée de l'UE (206) par rapport au dispositif ;

dans lequel la longueur de la première sous-trame spéciale étendue (2260) est inférieure à la longueur de la deuxième sous-trame spéciale étendue (2262).

15. Produit programme informatique agencé pour des communications sans fil, le produit programme informatique comprenant :

un support non transitoire lisible par un ordinateur comportant du code de programme mémorisé sur lui, le code de programme comprenant des instructions qui, lorsque le code de programme est exécuté par un ordinateur, amènent l'ordinateur à réaliser les étapes de l'une quelconque des revendications 1 à 12.

Evolved Packet System 100

E-UTRAN 104

User Equipment 102

eNodeB 106

Other eNodeBs 108

HSS 120

MME 112

Other MMEs 114

Serving Gateway 116

PDN Gateway 118

EPC 110

Operator's IP Services 122

FIG. 1

EP 3 050 226 B1

24

FIG. 2

FIG. 3

EP 3 050 226 B1

| | One Subframe | | | One Subframe | | |
|---|---|---|---|---|---|---|
| | Left Slot | Right Slot | | Left Slot | Right Slot | |
| ⋮  410a | ⋮ | | ⋮ | ⋮ | | Control Section |
| PUCCH (Control Information) | Resource Block | | Resource Block | Resource Block | | |
| ⋮ | ⋮ | | ⋮ | ⋮ | | |
| Resource Block | Resource Block | | ⋮  420a | ⋮ | | |
| PRACH | PRACH | | PUSCH (Data & Control Information) | Resource Block | | Data Section |
| ⋮ | ⋮ | | ⋮ | ⋮ | | |
| PRACH | PRACH | | ⋮ | ⋮  420b | | |
| Resource Block | Resource Block | | Resource Block | PUSCH (Data & Control Information) | | |
| ⋮ | ⋮ | | ⋮ | ⋮ | | |
| ⋮ | ⋮  410b | | ⋮ | ⋮ | | Control Section |
| Resource Block | PUCCH (Control Information) | | Resource Block | Resource Block | | |
| ⋮ | ⋮ | | ⋮ | ⋮ | | |

Subframe i          Subframe i+1          Time

FIG. 4

500

Control-plane ← → User-plane

508

L3

RRC — 516

Radio Bearers

PDCP — 514

L2

RLC — 512

Logical Channels

MAC — 510

Transport Channels

L1

Physical Layer — 506

FIG. 5

FIG. 6

EP 3 050 226 B1

29

FIG. 7

800

802-1

804-1
804-2
804-3
804-4
804-5
804-6
804-7
804-8
804-9
804-10
804-11
804-12

●
●
●

802-N

804-1
804-2
804-3
804-4
804-5
804-6
804-7
804-8
804-9
804-10
804-11
804-12

FIG. 8

900

UE A

910

UE B

UE C

UE A Transmit Timing $\alpha$

UE B Transmit Timing $\beta$

UE C Transmit Timing $\gamma$

FIG. 9

FIG. 10

EP 3 050 226 B1

1100

1112

$T_{GP}$

1010

1008-1

1006-1

eNodeB | downlink | | uplink | | downlink

$T_p$     $T_p$

1008-2

1006-2

UE | | downlink | uplink | | downlink

1050

$T_p$

1014

1120

downlink and uplink overlap

FIG. 11

EP 3 050 226 B1

1200

| Uplink-downlink config-uration | Downlink-to-Uplink Switch-point periodicity | Subframe number | | | | | | | | | |
|---|---|---|---|---|---|---|---|---|---|---|---|
| | | SF 0 | SF 1 | SF 2 | SF 3 | SF 4 | SF 5 | SF 6 | SF 7 | SF 8 | SF 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

1232   1234   1230

(special subframe 1ms)

1242 — DwPTS | GP | UpPTS — 1246

1244

1240

FIG. 12

1300

| Special subframe configuration 1332 | DwPTS/GP/UpPTS length for normal CP (OFDM symbols) 1336 | | |
|---|---|---|---|
| | DwPTS 1342 | GP 1344 | UpPTS 1346 |
| 0 | 3 | 10 | 1 |
| 1 | 9 | 4 | |
| 2 | 10 | 3 | |
| 3 | 11 | 2 | |
| 4 | 12 | 1 | |
| 5 | 3 | 9 | 2 |
| 6 | 9 | 3 | |
| 7 | 10 | 2 | |
| 8 | 11 | 1 | |

FIG. 13

EP 3 050 226 B1

1400

| configuration index | | Subframe number | | | | | | | | | |
|---|---|---|---|---|---|---|---|---|---|---|---|
| | | SF 0 | SF 1 | SF 2 | SF 3 | SF 4 | SF 5 | SF 6 | SF 7 | SF 8 | SF 9 |
| 0-6 | 10 ms | D | S | | | | D | S/D | | | |

_1432_    _1430_

**SF 0**

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| | | | | | | | PBCH | PBCH | PBCH | PBCH | | | SSS |

**SF 1**

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| | | PSS | | | | | | | | | | | |

**SF 5**

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| | | | | | | | | | | | | | SSS |

**SF 6**

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| | | PSS | | | | | | | | | | | |

FIG. 14

1500

| SF 0 | SF 1 | SF 2 | SF 3 | SF 4 | SF 5 | SF 6 | SF 7 | SF 8 | SF 9 |
|------|------|------|------|------|------|------|------|------|------|
| D | S | | | | D | S/D | | | |

FIG. 15

New frame structure with *10ms* periodicity

| configuration index | | SF 0 | SF 1 | SF 2 | SF 3 | SF 4 | SF 5 | SF 6 | SF 7 | SF 8 | SF 9 |
|---|---|---|---|---|---|---|---|---|---|---|---|
| | | | | | | Subframe number | | | | | |
| A | | D | S | U | U | D | S | U | U |
| B | | D | S | U | U | D | D | D | D | D |

1650

FIG. 16A

| Uplink-downlink configuration | | Subframe number | | | | | | | | | |
|---|---|---|---|---|---|---|---|---|---|---|---|
| BigSky2 | 3GPP | SF 0 | SF 1 | SF 2 | SF 3 | SF 4 | SF 5 | SF 6 | SF 7 | SF 8 | SF 9 |
| A | 0 | D | S | U | U | U | D | S | U | U | U |
| B | 3 | D | S | U | U | U | D | D | D | D | D |

1630-2

| Special subframe configuration | DwPTS/GP/UpPTS length for normal CP (OFDM symbols) | | |
|---|---|---|---|
| | DwPTS | GP | UpPTS |
| 0 | 3 | 10 | 1-mute |

1642  1644  1646

1640

FIG. 16B

EP 3 050 226 B1

EP 3 050 226 B1

*1732*  *1700*

| configuration index | | Subframe number | | | | | | | | | |
|---|---|---|---|---|---|---|---|---|---|---|---|
| C | *Odd frame* | *SF 0* | *SF 1* | *SF 2* | *SF 3* | *SF 4* | *SF 5* | *SF 6* | *SF 7* | *SF 8* | *SF 9* |
| | | D | S | U | U | U | D | S | U | U | U |
| | *Even frame* | *SF 10* | *SF 11* | *SF 12* | *SF 13* | *SF 14* | *SF 15* | *SF 16* | *SF 17* | *SF 18* | *SF 19* |
| | | D | S | U | U | U | D | D | D | D | D |

(special subframe 2ms)

1752 | DwPTS | GP | 1754

1750

**FIG. 17A**

*1732*  *1700*

| Uplink-downlink configuration | | Subframe number | | | | | | | | | |
|---|---|---|---|---|---|---|---|---|---|---|---|
| BigSky2 | 3GPP | *SF 0* | *SF 1* | *SF 2* | *SF 3* | *SF 4* | *SF 5* | *SF 6* | *SF 7* | *SF 8* | *SF 9* |
| C | 0 | D | S | *U* | U | U | D | S | *U* | U | U |
| | | *SF 10* | *SF 11* | *SF 12* | *SF 13* | *SF 14* | *SF 15* | *SF 16* | *SF 17* | *SF 18* | *SF 19* |
| | 3 | D | S | *U* | U | U | D | D | D | D | D |

| Special subframe configuration | DwPTS/GP/UpPTS length for normal CP (OFDM symbols) | | |
|---|---|---|---|
| | *1742* DwPTS | *1744* GP | *1746* UpPTS |
| 0 | 3 | 10 | 1-mute |

1740

**FIG. 17B**

New frame structure with *10ms* periodicity

1832

| configuration index | | Subframe number | | | | | | | | | |
|---|---|---|---|---|---|---|---|---|---|---|---|
| | | SF 0 | SF 1 | SF 2 | SF 3 | SF 4 | SF 5 | SF 6 | SF 7 | SF 8 | SF 9 |
| D | | D | S | | | U | D | S | | | U |
| E | | D | S | | | U | D | D | D | D | D |

1850

1800

FIG. 18A

| Uplink-downlink configuration | | Subframe number | | | | | | | | | |
|---|---|---|---|---|---|---|---|---|---|---|---|
| BigSky2 | 3GPP | SF 0 | SF 1 | SF 2 | SF 3 | SF 4 | SF 5 | SF 6 | SF 7 | SF 8 | SF 9 |
| D | 0 | D | S | U | U | U | D | S | U | U | U |
| E | 3 | D | S | U | U | U | D | D | D | D | D |

1800

| Special subframe configuration | DwPTS/GP/UpPTS length for normal CP (OFDM symbols) | | |
|---|---|---|---|
| | DwPTS | GP | UpPTS |
| | 1842 | 1844 | 1846 |
| 0 | 3 | 10 | 1-mute |

1840

FIG. 18B

EP 3 050 226 B1

New frame structure with *20ms* periodicity

| configuration index | D | Subframe number | | | | | | | | | |
|---|---|---|---|---|---|---|---|---|---|---|---|
| F | *Odd frame* | *SF 0* | *SF 1* | *SF 2* | *SF 3* | *SF 4* | *SF 5* | *SF 6* | *SF 7* | *SF 8* | *SF 9* |
| | | D | S | | | U | D | S | | | U |
| | *Even frame* | *SF 10* | *SF 11* | *SF 12* | *SF 13* | *SF 14* | *SF 15* | *SF 16* | *SF 17* | *SF 18* | *SF 19* |
| | | D | S | | | U | D | D | D | D | D |

(special subframe 3ms)

| DwPTS | GP |
|---|---|

1950

**FIG. 19A**

| Uplink-downlink configuration | | Subframe number | | | | | | | | | |
|---|---|---|---|---|---|---|---|---|---|---|---|
| BigSky2 | 3GPP | *SF 0* | *SF 1* | *SF 2* | *SF 3* | *SF 4* | *SF 5* | *SF 6* | *SF 7* | *SF 8* | *SF 9* |
| F | 0 | D | S | *U* | *U* | U | D | S | *U* | *U* | U |
| | | *SF 10* | *SF 11* | *SF 12* | *SF 13* | *SF 14* | *SF 15* | *SF 16* | *SF 17* | *SF 18* | *SF 19* |
| | 3 | D | S | *U* | *U* | U | D | D | D | D | D |

| Special subframe configuration | DwPTS/GP/UpPTS length for normal CP (OFDM symbols) | | |
|---|---|---|---|
| | DwPTS | GP | UpPTS |
| 0 | 3 | 10 | 1-mute |

1940

**FIG. 19B**

EP 3 050 226 B1

2000

| DL-to-UL configuration index | Coverage (km) | Special-SF length (ms) | Periodicity (ms) | DL-to-UL ratio* | Number of Special-SF (per frame) | GT period (OFDM symbol) | GT overhead |
|---|---|---|---|---|---|---|---|
| 0 (3GPP) | 100 | 1 | 10 | 1 DL : 3 UL | 2 | 10 | 14.3% |
| 3 (3GPP) | | | 10 | 2 DL : 1 UL | 1 | 10 | 7.1% |
| A | 250 | 2 | 10 | 1 DL : 2 UL | 2 | 25 | 35.7% |
| B | | | 10 | 3 DL : 1 UL | 1 | 25 | 17.9% |
| C | | | 20 | 4 DL : 3 UL | 1.5 | 25 | 26.8% |
| D | 350 | 3 | 10 | 1 DL : 1 UL | 2 | 39 | 55.7% |
| E | | | 10 | 6 DL : 1 UL | 1 | 39 | 27.9% |
| F | | | 20 | 8 DL : 3 UL | 1.5 | 39 | 41.8% |

FIG. 20

2100

eNodeB

distance > 250km

AT 2

Zone 2

distance < 250km

AT 1

Zone 1

Zone 0

FIG. 21

EP 3 050 226 B1

2232

| configuration index | | Subframe number | | | | | | | | | |
|---|---|---|---|---|---|---|---|---|---|---|---|
| C/F | *Odd frame* | *SF 0* | *SF 1* | *SF 2* | *SF 3* | *SF 4* | *SF 5* | *SF 6* | *SF 7* | *SF 8* | *SF 9* |
| | | D | S | | U/S | U | D | S | | U/S | U |
| | *Even frame* | *SF 10* | *SF 11* | *SF 12* | *SF 13* | *SF 14* | *SF 15* | *SF 16* | *SF 17* | *SF 18* | *SF 19* |
| | | D | S | | U/S | U | D | D | D | D | D |

2260

2262

FIG. 22A

2200

| Uplink-downlink configuration | | Subframe number | | | | | | | | | |
|---|---|---|---|---|---|---|---|---|---|---|---|
| BigSky2 | 3GPP | *SF 0* | *SF 1* | *SF 2* | *SF 3* | *SF 4* | *SF 5* | *SF 6* | *SF 7* | *SF 8* | *SF 9* |
| {C/F} | 0 | D | S | *U* | U/S | U | D | S | *U* | U/S | U |
| | | *SF 10* | *SF 11* | *SF 12* | *SF 13* | *SF 14* | *SF 15* | *SF 16* | *SF 17* | *SF 18* | *SF 19* |
| | 3 | D | S | *U* | U/S | U | D | D | D | D | D |

| Special subframe configuration | DwPTS/GP/UpPTS length for normal CP (OFDM symbols) | | |
|---|---|---|---|
| | DwPTS | GP | UpPTS |
| | 2242 | 2244 | 2246 |
| 0 | 3 | 10 | 1-mute |

2240

FIG. 22B

2200

45

FIG. 23

2400

2410

DETECT A POSITION OF A UE AS
BEING WITHIN A FIRST EXTENDED
CELL RADIUS OR A SECOND
EXTENDED CELL RADIUS

2412

COMMUNICATE WITH UE USING A
SPECIAL SUBFRAME THAT EXTENDS
OVER AN UPLINK PILOT TIME SLOT
AND ONE OR MORE DISABLED,
ADJACENT UPLINK SUBFRAMES

FIG. 24

FIG. 25

EP 3 050 226 B1

**EP 3 050 226 B1**

**REFERENCES CITED IN THE DESCRIPTION**

**Patent documents cited in the description**

- EP 2216915 A1

- EP 2207278 A1